# EUROPÄISCHE PATENTSCHRIFT

(11) **EP 3 292 753 B1**
(45) Veröffentlichungstag und Bekanntmachung des Hinweises auf die Patenterteilung: **13.11.2019**
(21) Anmeldenummer: 16188386.3
(22) Anmeldetag: 12.09.2016
(51) Int. Cl.: A01K 45/00

(54) **ENTLADESYSTEM UND VERFAHREN ZUM ENTLADEN VON TRANSPORTEINHEITEN FÜR LEBENDIGE GEFLÜGELTIERE**
DISCHARGING SYSTEM AND METHOD FOR UNLOADING OF TRANSPORT UNITS FOR LIVE POULTRY ANIMALS
SYSTÈME DE DÉCHARGEMENT ET PROCÉDURE DE DÉCHARGEMENT D'UNITÉS DE TRANSPORT POUR VOLAILLES VIVANTES

(43) Veröffentlichungstag der Anmeldung: 14.03.2018
(73) Patentinhaber: Linco Food Systems A/S, 8380 Trige (DK)
(72) Erfinder: Ovesen, Henrik, 8400 Ebeltoft (DK)
(74) Vertreter: Stork Bamberger Patentanwälte PartmbB

(56) Entgegenhaltungen:
- EP-A1- 0 956 766
- EP-A1- 2 781 270
- WO-A2-2014/031001
- DE-A1- 3 837 152

## Beschreibung

EP 0956 766 A1 und DE 3837 152 A1 beschreiben Vorrichtungen und Verfahren für Entladeeinrichtungen für Geflügelkäfige.

### Beschreibung

Die Erfindung betrifft ein Entladesystem, ausgebildet und eingerichtet zum Entladen wenigstens einer zum Transport und/oder zum Lagern von lebendigen Geflügeltieren eingerichteten Transporteinheit, die wenigstens ein Rahmengestell und wenigstens einen darin gelagerten Transportbehälter zum Aufnehmen der Geflügeltiere aufweist, wobei das Rahmengestell für jeden Transportbehälter eine Transportsicherung umfasst und jeder nach oben offene Transportbehälter einen Behälterboden und umlaufende Seitenwände aufweist und jeder im Rahmengestell gelagerte Transportbehälter nach oben durch eine Abdeckung abgedeckt ist, die beabstandet zur oberen Kante der Seitenwände angeordnet ist, umfassend eine Entladestation für mindestens eine Transporteinheit, mindestens eine Transporteinheit, eine Stoßeinrichtung zum Ausstoßen jedes sich in einer Ausstoßposition befindlichen Transportbehälters aus dem Rahmengestell in Stoßrichtung S, und eine Aufnahmeeinrichtung zum Aufnehmen und Fördern jedes aus dem Rahmengestell ausgestoßenen Transportbehälters.

Des Weiteren betrifft die Erfindung ein Verfahren zum Entladen von wenigstens einer zum Transport und/oder Lagern von lebendigen Geflügeltieren eingerichteten Transporteinheit, die wenigsten ein Rahmengestell und wenigstens einen darin gelagerten Transportbehälter zum Aufnehmen der Geflügeltiere aufweist, wobei jeder nach oben offene Transportbehälter einen Behälterboden und umlaufende Seitenwände aufweist und jeder im Rahmengestell gelagerte Transportbehälter nach oben durch eine Abdeckung abgedeckt ist, die beabstandet zur oberen Kante der Seitenwände angeordnet ist, umfassend die Schritte: Einführen mindestens einer Transporteinheit in eine Entladestation, Ausstoßen mindestens eines in Ausstoßposition befindlichen Transportbehälters aus dem Rahmengestell in Stoßrichtung S mittels einer Stoßeinrichtung, und Aufnehmen und Fördern jedes aus dem Rahmengestell ausgestoßenen Transportbehälters mittels einer Aufnahmeeinrichtung.

Solche Entladesysteme und Verfahren kommen in der Geflügel verarbeitenden Industrie zum Einsatz. Lebendige Geflügeltiere, auch als Lebendgeflügel bezeichnet, werden insbesondere zu Transport- und Zwischenlagerungszwecken in Transportbehältern gehalten. Einzelne oder mehrere zu einem Stapel übereinander angeordnete Transportbehälter sind in einem Rahmengestell gelagert. Diese aus Rahmengestell und mindestens einem Transportbehälter bestehenden Einheiten bilden eine Transporteinheit. Die Transporteinheiten mit dem Lebendgeflügel werden z.B. auf einem LKW von einer Geflügelzuchtfarm zu einer Fabrik für Geflügelverarbeitung transportiert oder im Bereich der Fabrik für Geflügelverarbeitung gelagert. Für den tatsächlichen Verarbeitungsprozess des Lebendgeflügel sind die einzelnen Transportbehälter dann aus dem Rahmengestell zu entfernen, wofür die Entladesysteme eingesetzt werden. Die Transportbehälter werden mittels der Stoßeinrichtung aus dem Rahmengestell in Richtung der Aufnahmeeinrichtung gestoßen, die die Transportbehälter aufnimmt. Mittels der Aufnahmeeinrichtung werden die Transportbehälter dann zur weiteren Verarbeitung gefördert.

Die Transportbehälter weisen einen Behälterboden sowie umlaufende Seitenwände auf, so dass ein nach oben offener Aufnahmeraum gebildet ist. Innerhalb des Rahmengestells sind die nach oben offenen Transportbehälter durch eine Abdeckung abgedeckt, so dass das Lebendgeflügel in dem jeweiligen Transportbehälter verbleibt. Diese Abdeckung kann ein einfaches Deckelelement sein, das dem Rahmengestell zugeordnet ist. Üblicherweise befinden sich jedoch mehrere solcher Transportbehälter übereinander in einem Rahmengestell, so dass die Abdeckung jeweils durch den Behälterboden eines darüber angeordneten Transportbehälters gebildet wird. Lediglich für den in der obersten Position im Rahmengestell gelagerten Transportbehälter dient das Deckelelement als Abdeckung.

Die Abdeckung weist zu den oberen Kanten der Seitenwände des darunter angeordneten Transportbehälters einen (Basis-)Abstand A_{B} auf. Aus Effizienzgründen (z.B. Platz sparen, leeres Volumen vermeiden) sowie zur Vermeidung der Flucht des Lebendgeflügels aus den Transportbehältern ist dieser Abstand möglichst gering zu halten. In der Praxis beträgt dieser Abstand etwa 30mm, so dass zwischen der oberen Kante der Seitenwände und der darüber befindlichen Abdeckung ein Spalt gebildet ist. Dieser ist notwendig, um die Transportbehälter möglichst leicht mittels der Stoßeinrichtung aus dem Rahmengestell ausstoßen zu können. Die lebendigen Geflügeltiere haben die Neigung, sich insbesondere beim Ausstoßprozess aufzurichten und/oder innerhalb des Transportbehälters zu bewegen. Das führt häufig dazu, dass sich das Lebendgeflügel mit ihren Extremitäten, wie z.B. Flügeln oder dem Kopf, in dem Spalt zwischen der oberen Kante der Seitenwände und der Abdeckung verfängt. Dadurch wird eine hohe Belastung auf das Lebendgeflügel ausgeübt, die zur Verletzung/Beschädigung des Lebendgeflügels führen kann. Dieser Effekt tritt verstärkt auf, wenn sich der Abstand zwischen der oberen Kante der Seitenwände der Transportbehälter und der Abdeckung durch eine durch den Ausstoßprozess bedingte Abstandsverringerung von Transportbehälter zur Abdeckung verändert und insbesondere verringert, so dass die Extremitäten zwischen dem Transportbehälter und der Abdeckung einklemmen. Beim endgültigen Ausstoßen der Transportbehälter aus dem Rahmengestell wirken dann Scherkräfte auf die Extremitäten, so dass diese verletzt oder schlimmstenfalls ganz abgerissen werden.

Beim Ausstoßprozess werden die Transportbehälter durch das Drücken über die mindestens am Austrittsbereich des Rahmengestells angeordneten Transportsicherungen mit ihrem vorauslaufenden Ende angehoben, was dazu führt, dass der Transportbehälter während des Ausstoßvorgangs geneigt innerhalb des Rahmengestells geführt ist. Die Schrägstellung der Transportbehälter innerhalb des Rahmengestells bleibt solange ohne Folgen für das Lebendgeflügel, wie dem Lebendgeflügel ausreichend Ausweichraum zur Verfügung steht und das nachlaufende Ende des Transportbehälters mit der oberen Kante der Seitenwände den maximalen (Basis-) Abstand A_{B} zur darüber liegenden Abdeckung hält. Spätestens, wenn sich der Abstand der oberen Kante der Seitenwände der Transportbehälter zur Abdeckung verringert, insbesondere am nachlaufenden Ende der Transportbehälter, beispielsweise dadurch, dass der Transportbehälter mit seinem vorauslaufenden Ende, das bereits aus dem Rahmengestell ragt, nach unten abkippt, kommt es aufgrund der Abstandsverringerung zur Klemmung der Extremitäten. Wenn der Transportbehälter dann mit seinem nachlaufenden Ende den Austrittsbereich des Rahmengestells erreicht, besteht aufgrund der Rahmengestellkonstruktion kein Ausweichraum mehr, so dass das Lebendgeflügel nicht mehr ausweichen kann, sondern die Extremitäten zwischen der oberen Kante der nachlaufenden Seitenwand und der Abdeckung eingeklemmt und abgeschert werden.

Bei den bekannten Entladesystemen sind die einzelnen Komponenten, insbesondere der Übergang von Transportstation zu Aufnahmeeinrichtung, starr miteinander verbunden bzw. unflexibel zueinander angeordnet, so dass die Position der Transportbehälter innerhalb des Rahmengestells ausschließlich durch den Ausstoßprozess bestimmt wird. Mögliche Bewegungen der Transportbehälter, die Einfluss auf den Abstand zwischen der oberen Kante der Seitenwände zur Abdeckung haben, können nicht ausgeglichen werden, so dass ein unkontrolliertes Ausstoßen erfolgt, mit dem Ergebnis, dass das Wohlergehen des Lebendgeflügels nicht sichergestellt werden kann.

Der Erfindung liegt nun somit die Aufgabe zugrunde, ein einfaches und vor allem das Lebendgeflügel schonendes Entladesystem für Transporteinheiten zu schaffen. Die Aufgabe besteht weiterhin darin, ein entsprechendes Verfahren vorzuschlagen.

Diese Aufgabe wird durch ein Entladesystem mit den eingangs genannten Merkmalen dadurch gelöst, dass die Position jedes sich in der Ausstoßposition befindlichen Transportbehälters in Bezug auf die Abdeckung in vertikaler Richtung während des gesamten Ausstoßvorgangs steuerbar ist, derart, dass der maximale Abstand A_{B} zwischen der oberen Kante der in Stoßrichtung S nachlaufenden Seitenwände jedes Transportbehälters und der Abdeckung in Abhängigkeit der jeweiligen Position des Transportbehälters innerhalb des Rahmengestells während des Ausstoßvorgangs einhaltbar ist. Der maximale Abstand ist der durch die Konstruktion von Transportbehälter und Rahmengestell bedingte (Basis-)Abstand A_{B}. In der ursprünglichen Transport- oder Lagerposition der Transportbehälter im Rahmengestell, also vor dem Beginn des Ausstoßvorgangs, besteht zwischen der oberen Kante der Seitenwände der Transportbehälter und der Abdeckung der Abstand A_{B}. Dadurch, dass jeder Transportbehälter in der Ausstoßposition während des gesamten Ausstoßvorgangs steuerbar ist, also in Bezug auf die und relativ zur Abdeckung in vertikaler Richtung bewegbar ist, kann der Abstand A_{B} für die obere Kante der nachlaufenden Seitenwände auch während des Ausstoßvorgangs maximal lange konstant gehalten werden. Mögliche Abstandsveränderungen, insbesondere Abstandsverringerungen des nachlaufenden Endes des Transportbehälters gegenüber der Abdeckung, können dadurch beim Ausstoßvorgang ausgeglichen werden. Dadurch wird dem Lebendgeflügel im Bereich des nachlaufenden Endes des Transportbehälters während des gesamten Ausstoßprozesses die maximale "Kopffreiheit" (Abstand nach oben zur Abdeckung) zur Verfügung gestellt. Anders ausgedrückt wird der Spalt zwischen der oberen Kante der nachlaufenden Seitenwände und der Abdeckung in jeder Position maximal gehalten, so dass die Klemmgefahr und damit die Abschergefahr für das Lebendgeflügel reduziert sind. Mit der erfindungsgemäßen Ausbildung wird die Verletzungsgefahr für das Lebendgeflügel reduziert und somit das Wohlergehen des Lebendgeflügels während des Ausstoßprozesses der Transportbehälter aus dem Rahmengestell optimiert.

Eine besonders vorteilhafte Ausführungsform ist dadurch gekennzeichnet, dass jede Transporteinheit quaderförmig ausgebildet ist, wobei jedes Rahmengestell zur Aufnahme von mindestens zwei übereinander angeordneten Transportbehältern ausgebildet und eingerichtet ist, so dass der Behälterboden eines Transportbehälters für den jeweils darunter gelagerten Transportbehälter die Abdeckung bildet und der an oberster Position im Rahmengestell gelagerte Transportbehälter durch ein dem Rahmengestell zugeordnetes Deckelelement als Abdeckung abgedeckt ist, und eine der Stoßeinrichtung zugewandte erste Gestellseite und eine dieser gegenüberliegende, der Aufnahmeeinrichtung zugewandte zweite Gestellseite aufweist und auf beiden Gestellseiten für jeden Transportbehälter quer zur Stoßrichtung S der Transportbehälter ausgerichtete Querstreben als Transportsicherung umfasst, die mit korrespondierenden Ausformungen im Behälterboden jedes Transportbehälters zusammenwirken, und für jeden Transportbehälter parallel zur Stoßrichtung S der Transportbehälter seitlich am Rahmengestell angeordnete Führungsschienen zum Führen der Transportbehälter innerhalb des Rahmengestells umfasst, wobei der vertikale Abstand A zwischen den übereinander angeordneten Querstreben einerseits und zwischen den obersten Querstreben und dem Deckelelement des Rahmengestells andererseits mindestens auf der zweiten, der Aufnahmeeinrichtung zugewandten Gestellseite jeweils größer ist als die Gesamthöhe eines Transportbehälters. Durch diese Konstruktion ist einerseits gewährleistet, dass der oder jeder Transportbehälter sicher innerhalb des Rahmengestells gelagert ist. Andererseits ermöglicht diese Konstruktion auch ein einfaches und schnelles Entladen. In der ursprünglichen Transport- oder Lagerposition liegt jeder Transportbehälter mit der Bodenwand zu beiden Seiten auf den Führungsschienen auf. An den beiden Gestellseiten liegt jeder Transportbehälter mit der Bodenwand derart auf den Querstreben, dass die Unterseite der Bodenwand unterhalb der oberen Kante der Querstreben liegt. Anders ausgedrückt liegt der Transportbehälter zu beiden Gestellseiten mit den Ausformungen auf den Querstreben, so dass die Querstreben eine Barriere bilden. Durch diese Ausbildung und insbesondere das "Zusammenwirken" von Bodenwand und Querstreben ist eine rein horizontale Bewegung des Transportbehälters in Stoßrichtung S und entgegen der Stoßrichtung behindert. Diese Ausbildung führt dazu, dass jeder Transportbehälter beim Ausstoßen mit seinem vorauslaufenden Ende gegen den Widerstand der Querstrebe angehoben bzw. aus der gesicherten ursprünglichen Transport- oder Lagerposition ausgehoben wird, so dass der Transportbehälter mit seiner Bodenwand auf der Querstrebe, die der zweiten, der Aufnahmeeinrichtung zugewandten Gestellseite zugeordnet ist, entlanggleitet. Dadurch befindet sich der Transportbehälter zunächst in einer Schräglage, in der das vorauslaufende Ende höher steht als das nachlaufende Ende. Sobald der Transportbehälter etwa zur Hälfte aus dem Rahmengestell ausgestoßen ist - am so genannten Kipppunkt - würde sich das vorauslaufende Ende bedingt durch die Schwerkraft, nach unten senken, mit dem Effekt, dass das nachlaufende Ende nach oben bewegt werden würde, gleichbedeutend mit einer Verringerung des Abstandes der oberen Kante der nachlaufenden Seitenwände. Erfindungsgemäß wird diesem Effekt des Kippens entgegengewirkt, indem das vorauslaufende Ende des Transportbehälters steuerbar ist, nämlich aktiv angehoben wird, sobald der Transportbehälter den Kipppunkt erreicht. Das Anheben des vorauslaufenden Endes des Transportbehälters führt dazu, dass die Bodenwand am nachlaufenden Ende des Transportbehälters permanent Kontakt zu den Führungsschienen behält, wodurch der Abstand A_{B} im Bereich des nachlaufenden Endes während des gesamten Ausstoßprozesses konstant gehalten wird. Dadurch wird die Klemmgefahr mit den bereits erwähnten Vorteilen reduziert.

Besonders bevorzugt ist die Aufnahmeeinrichtung zur Veränderung ihrer Höhenposition und/oder ihrer Winkelstellung in Bezug auf die Ausstoßposition jedes Transportbehälters mindestens abschnittsweise verstellbar ausgebildet. Mit der Höhenposition ist das auf und ab Bewegen des gesamten einen Transportbehälter aufnehmenden Abschnitts der Aufnahmeeinrichtung beschrieben. Das Verändern der Höhenposition wirkt sich somit auf den gesamten Abschnitt aus. Dadurch besteht die Möglichkeit, die Aufnahmeeinrichtung mit ihrer Oberseite, die die Aufnahmeebene E_{A2} definiert, oberhalb oder unterhalb der Ausstoßebene E_{A1}, die durch die Auflageflächen der Führungsschienen für den in der Ausstoßposition befindlichen Transportbehälter definiert wird, zu positionieren. Mit der Veränderung der Winkelposition ist das einseitige auf und ab Bewegen des gesamten einen Transportbehälter aufnehmenden Abschnitts beschrieben, derart, dass die Aufnahmeebene E_{A2} in einem (veränderbaren) Winkel α zur Ausstoßebene E_{A1} steht und diese schneidet. Dadurch, dass die Höhenposition und die Winkelposition einzeln/separat oder kombiniert/überlagert einstellbar sind, ist eine individuelle Positionsanpassung der Aufnahmeeinrichtung an die Entladestation und damit eine optimierte Positionsanpassung der Aufnahmeeinrichtung an die sich im Ausstoßprozess befindlichen Transportbehälter möglich. Durch diese erfindungsgemäße Weiterbildung kann jeder Transportbehälter unter Einhaltung der optimalen Abstände (entsprechend der größtmöglichen Abstände) zur Abdeckung aus dem Rahmengestell "gewunden" werden. Anders ausgedrückt kann durch die erfindungsgemäße Ausgestaltung unmittelbar Einfluss auf die Transportbehälter ausgeübt werden, so dass durch den Ausstoßprozess bedingte Positionsveränderungen/Abstandsveränderungen der Transportbehälter zur Abdeckung innerhalb des Rahmengestells ausgeglichen werden können, wodurch der Schutz des Lebendgeflügels verbessert wird.

Eine vorteilhafte Ausführungsform ist dadurch gekennzeichnet, dass die Aufnahmeeinrichtung eine der Entladestation zugewandte erste Eintrittsseite und eine der Entladestation abgewandte zweite Austrittsseite aufweist, wobei der Aufnahmeeinrichtung ein Verstellmechanismus zugeordnet ist, mittels dem mindestens die der Entladestation abgewandte zweite Austrittsseite der Aufnahmeeinrichtung auf und ab bewegbar ausgebildet und eingerichtet ist. Damit sind die Höhe/der Level und die Winkellage der Aufnahmeeinrichtung veränderbar, um die Position des Transportbehälters während des Ausstoßvorgangs zu verändern. Diese Einstellmöglichkeit ermöglicht auf besonders einfache Weise das Steuern der Position eines Transportbehälters in Bezug auf die Abdeckung in vertikaler Position während des Ausstoßvorgangs. Durch das Anheben und Absenken der Austrittsseite der Aufnahmeeinrichtung, also die Veränderung des Winkels α zwischen den Ebenen E_{A1} und E_{A2}, kann die Ausrichtung der Aufnahmeebene E_{A2} gegenüber der Ausstoßebene E_{A1} verändert werden, um den bereits teilweise aus dem Rahmengestell ausgestoßenen Transportbehälter quasi abzuholen und in eine Position zu bringen, in der das nachlaufende Ende des Transportbehälters so lange wie möglich in der Position des maximalen Abstandes zur Abdeckung gehalten wird. Als Verstellmechanismus können rein mechanisch Lösungen, wie z.B. Nocken- oder Kurvensteuerungen, oder elektronische, hydraulische oder pneumatische Lösungen sowie Kombinationslösungen eingesetzt werden.

Zweckmäßigerweise ist die Aufnahmeeinrichtung mittels des Verstellmechanismus an beiden Seiten auf und ab bewegbar ausgebildet und eingerichtet. Durch die Verbesserung bzw. die Vergrößerung der Anzahl der Verstellmöglichkeiten der Aufnahmeeinrichtung können individuelle Bewegungsabläufe der Transportbehälter während des Ausstoßvorgangs erreicht werden. Insbesondere besteht die Möglichkeit, die Aufnahmeeinrichtung unmittelbar nach vollständiger Übernahme der Transportbehälter aus dem Rahmengestell weiter nach unten zu bewegen, um eine maximale Kopffreiheit zu erreichen und den Übergang des nachlaufenden Endes des Transportbehälters aus dem Rahmengestell an die Aufnahmeeinrichtung möglichst kurz zu halten.

Eine besonders bevorzugte Weiterbildung ist dadurch gekennzeichnet, dass das Entladesystem eine Steuerungseinrichtung umfasst, die zum Steuern des Verstellmechanismus in Abhängigkeit der Position jedes Transportbehälters innerhalb des Rahmengestells während des Ausstoßvorgangs ausgebildet und eingerichtet ist. Die Steuerungseinrichtung kann mechanisch, elektronisch, hydraulisch oder pneumatisch sowie kombiniert ausgebildet sein. Mit anderen Worten sind Mittel als Steuerungseinrichtung vorgesehen, mittels denen anhand der Position des Transportbehälters innerhalb des Rahmengestells während des Ausstoßvorgangs der Verstellmechanismus steuerbar/betätigbar ist. Diese Mittel können beispielsweise durch einen Exzenter betriebenen Schwenkarm, Timer, Tachometer oder Sensoren gebildet sein. Mit Hilfe dieser Steuerungseinrichtung kann eine exakt abgestimmte Bewegungsbahn des Transportbehälters während des Ausstoßvorgangs erreicht werden, um zur Verbesserung des Schutzes des Lebendgeflügels den größtmöglichen Abstand zwischen der oberen Kante der nachlaufenden Seitenwände und der Abdeckung einzuhalten.

Vorteilhafterweise umfasst die Aufnahmeeinrichtung einen Aufnahmetisch zum Aufnehmen der Transportbehälter während des Ausstoßvorgangs, der mittels des Verstellmechanismus bezüglich seiner Höhenposition und/oder seiner Winkelstellung verstellbar ausgebildet und eingerichtet ist. Mit dem Aufnahmetisch ist ein Synonym für eine Auflage, die z.B. aus einem geschlossenen Band, einem einzelnen Kettentrieb, einem Doppelkettentrieb, mehreren beabstandet nebeneinander angeordneten Transportrollen oder dergleichen gebildet sein kann, beschrieben. Dadurch lassen sich die Transportbehälter besonders einfach und präzise aus dem Rahmengestell übernehmen.

Eine bevorzugte Weiterbildung ist dadurch gekennzeichnet, dass der Aufnahmetisch aus mehreren parallel und beabstandet zueinander angeordneten Transportrollen gebildet ist, die mittels eines Antriebsmittels rotierend antreibbar sind. Diese Transportrollen sind wahlweise mit ihrer Rotationsachse quer zur Stoßrichtung S oder in Stoßrichtung S ausgerichtet. Mehrere dieser Transportrollen bilden den Abschnitt der Aufnahmeeinrichtung, der zur Veränderung der Höhenposition und/oder der Winkelposition verstellbar ausgebildet ist. Dazu können die Transportrollen beispielsweise an einem gemeinsamen bewegbaren Rahmen angeordnet sein. Die Transportrollen können auch einzeln verstellbar ausgebildet sein. Mittels geeigneter Steuermittel können die einzelnen Transportrollen auch synchron bewegbar ausgebildet sein. Mit dem Antriebsmittel können die vollständig aus dem Rahmengestell ausgestoßenen Transportbehälter zur Weiterverarbeitung gefördert werden.

Besonders bevorzugt ist der Aufnahmetisch aus mindestens zwei beabstandet zueinander angeordneten Kettentrieben gebildet, die mittels eines Antriebsmittels antreibbar sind. Diese Kettentriebe weisen eine Förderrichtung in Stoßrichtung S auf. Damit ist eine konstruktiv besonders einfache Lösung geschaffen, um die Transportbehälter in Empfang zu nehmen und auf einer individuellen Bewegungsbahn aus dem Rahmengestell zu führen. Ein besonderer Vorteil besteht darin, dass die in Stoßrichtung S angetriebenen Kettentriebe das Ausstoßen der Transportbehälter unterstützen können, indem sie die Transportbehälter unterstützend zur Stoßeinrichtung aus dem Rahmengestell "ziehen". Dadurch kann der Ausstoßprozess funktional und zeitlich optimiert werden.

Eine vorteilhafte Weiterbildung ist dadurch gekennzeichnet, dass dem Aufnahmetisch ein Fördertisch zum Abfördern der vollständig ausgestoßenen Transportbehälter zugeordnet ist, wobei der Fördertisch und der Aufnahmetisch mittels mindestens eines Antriebsmittels mindestens in vertikaler Richtung relativ zueinander bewegbar ausgebildet sind und unterschiedliche Förderrichtungen aufweisen. Diese erfindungsgemäße Weiterbildung ermöglicht das Fördern der Transportbehälter wahlweise in Stoßrichtung S oder quer zur Stoßrichtung S.

Zweckmäßigerweise ist der Fördertisch aus mehreren parallel und beabstandet zueinander angeordneten und ortsfest ausgebildeten Transportrollen gebildet, die mittels eines Antriebsmittels rotierend antreibbar sind. Die Funktionalität des Förderns quer zur Stoßrichtung ist somit dem Fördertisch zugeordnet, während das Aufnehmen der Transportbehälter aus dem Rahmengestell sowie das Fördern der Transportbehälter in Stoßrichtung S dem Aufnahmetisch zugeordnet ist. Damit ist eine konstruktive einfache Lösung geschaffen, die Funktionalitäten von Aufnehmen der Transportbehälter aus dem Rahmengestell einerseits und Fördern der auf der Aufnahmeeinrichtung platzierten Transportbehälter in unterschiedliche Richtungen andererseits, zu kombinieren. Weitere vorteilhafte Optionen werden weiter unten beschrieben.

Eine bevorzugte Ausführungsform ist dadurch gekennzeichnet, dass der Entladestation eine Lifteinheit zum vertikalen Bewegen des Rahmengestells in die jeweilige Ausstoßposition für die Transportbehälter zugeordnet ist. Diese Lifteinheit ist insbesondere dann von Bedeutung, wenn die Transporteinheit ein Rahmengestell mit mindestens zwei übereinander gelagerten Transportbehältern umfasst. Der jeweils unterste Transportbehälter ist dann in die Ausstoßposition bewegbar, in der der Transportbehälter mittels der Stoßeinrichtung aus dem Rahmengestell bewegbar ist. Dadurch ist ein Entladen des Rahmengestells von unten nach oben, beginnend mit dem untersten Transportbehälter, gewährleistet. Optional ermöglicht die Ausbildung auch ein zeitgleiches Entladen aller Transportbehälter in einem Stapel. Das Entladen im Stapel kann auch zeitversetzt/gestaffelt erfolgen. Dazu sind die Transportbehälter mit einer Stoßfolge von Stapelebene zu Stapelebene, beginnend mit der untersten Stapelebene, stufig versetzt auszustoßen. Im Ergebnis liegen die Transportbehälter einer Transporteinheit dann direkt aufeinander gestapelt auf der Aufnahmeeinrichtung.

Vorteilhafterweise umfasst die Stoßeinrichtung mindestens einen Stößel zum Ausstoßen eines einzelnen Transportbehälters oder mehrerer Transportbehälter. Der Stößel kann einen Stößelarm aufweisen, mittels dem der jeweils in der Ausstoßposition befindliche Transportbehälter, vorzugsweise in der untersten Stapelebene befindliche Transportbehälter, ausgestoßen werden kann. Der Stößel kann auch mehrere Stößelarme, entsprechend der Anzahl der Stapelebenen, aufweisen, um mehrere übereinander gelagerte Transportbehälter gleichzeitig auszustoßen. Des Weiteren kann der Stößel auch mehrere unabhängig voneinander steuerbare Stößelarme aufweisen, mittels denen das stufige Ausstoßen mehrerer übereinander angeordneter Transportbehälter gewährleistet ist.

Die Aufgabe wird auch durch ein Verfahren mit den eingangs genannten Schritten dadurch gelöst, dass die Position jedes sich in der Ausstoßposition befindlichen Transportbehälters in Bezug auf die Abdeckung in vertikaler Richtung während des gesamten Ausstoßvorgangs aktiv gesteuert wird, derart, dass der maximale Abstand A_{B} zwischen der oberen Kante K der in Stoßrichtung S nachlaufenden Seitenwände jedes Transportbehälters und der Abdeckung in Abhängigkeit der jeweiligen Position des Transportbehälters innerhalb des Rahmengestells während des Ausstoßvorgangs eingehalten wird. Die Erfindung ermöglicht somit zur Schonung der Geflügeltiere und zur Vermeidung von Verletzungen ein kontrolliertes Ausstoßen der Transportbehälter aus dem Rahmengestell.

Vorzugsweise wird das in Stoßrichtung S vorauslaufende Ende jedes Transportbehälters durch das Stoßen des Transportbehälters in Stoßrichtung S gegen eine als Querstrebe ausgebildete Transportsicherung des Rahmengestells beim Ausstoßvorgang zunächst angehoben, wobei der Transportbehälter spätestens dann, wenn der Transportbehälter mindestens zur Hälfte aus dem Rahmengestell ausgestoßen ist, mit seinem Behälterboden durch die Aufnahmeeinrichtung aufgenommen und so weit nach oben gedrückt wird, indem die Aufnahmeeinrichtung nach oben gesteuert wird, dass die obere Kante K der in Stoßrichtung S nachlaufenden Seitenwände des Transportbehälters bis zum Erreichen der Querstrebe, auf der sie entlanggleitet, in einem maximalen Abstand A_{B} zur Abdeckung gehalten wird.

Eine bevorzugte Weiterbildung zeichnet sich dadurch aus, dass der Transportbehälter unmittelbar, nachdem er vollständig aus dem Rahmengestell herausgestoßen ist und der Behälterboden des Transportbehälters die Querstrebe, auf der sie entlanggleitet, überwunden und verlassen hat, zur Vergrößerung des Abstandes zwischen der oberen Kante der nachlaufenden Seitenwände des Transportbehälters und der darüber befindlichen Querstrebe des Rahmengestells nach unten bewegt wird, indem die Aufnahmeeinrichtung nach unten gesteuert wird.

Zweckmäßigerweise werden die vollständig auf der Aufnahmeeinrichtung liegenden Transportbehälter wahlweise in Stoßrichtung S oder quer zur Stoßrichtung S weitergefördert.

Eine vorteilhafte Ausgestaltung ist dadurch gekennzeichnet, dass die Aufnahmeeinrichtung mittels einer Steuerungseinrichtung in Abhängigkeit der Position jedes Transportbehälters innerhalb des Rahmengestells während des Ausstoßvorgangs automatisch gesteuert wird.

Vorteilhafterweise wird die Aufnahmeeinrichtung mittels der Steuerungseinrichtung wahlweise auf der der Entladestation zugewandten Seite und/oder auf der der Entladestation abgewandten Seite auf und/oder ab bewegt, so dass jeder Transportbehälter beim Ausstoßvorgang unter Beibehaltung des maximalen Abstandes A_{B} zwischen der oberen Kante K der nachlaufenden Seitenwände des Transportbehälters und der Abdeckung entlang einer individuellen Bewegungsbahn geführt wird.

Eine besonders bevorzugte Weiterbildung ist dadurch gekennzeichnet, dass mehrere in einem Rahmengestell übereinander angeordnete Transportbehälter mittels der Stoßeinrichtung gleichzeitig oder gestaffelt zueinander aus dem Rahmengestell ausgestoßen werden, derart, dass die Transportbehälter einer Transporteinheit auf der Aufnahmeeinrichtung im Stapel direkt aufeinanderliegen. Es kann also wahlweise ein Entladen nacheinander von unten nach oben oder umgekehrt oder ein stapelweises Entladen erfolgen, wobei beim stapelweisen Entladen alle Transportbehälter eines Stapels zeitgleich oder gestaffelt und einander überlappend nacheinander ausgestoßen werden.

Weitere sich durch das erfindungsgemäße Verfahren ergebenden Vorteile wurde bereits im Zusammenhang mit dem erfindungsgemäßen Entladesystem ausführlich erläutert, weshalb zur Vermeidung von Wiederholungen auf die entsprechenden Passagen verwiesen wird.

Weitere zweckmäßige und/oder vorteilhafte Merkmale und Weiterbildungen sowie bevorzugte Verfahrensschritte ergeben sich aus den Unteransprüchen und der Beschreibung. Besonders bevorzugte Ausführungsformen der Entladestation sowie das Verfahren werden anhand der beigefügten Zeichnung näher erläutert. In der Zeichnung zeigt:
- Fig. 1: eine schematische Darstellung eines Entladesystems gemäß der Erfindung in perspektivischer Ansicht,
- Fig. 2: eine Vorderansicht des Entladesystems gemäß Figur 1 mit dem untersten Transportbehälter in Ausstoßposition vor dem Ausstoßvorgang,
- Fig. 3: das Entladesystem gemäß Figur 2 mit dem untersten Transportbehälter während des Ausstoßvorgangs,
- Fig. 4: das Entladesystem gemäß Figur 2 mit dem untersten Transportbehälter kurz vor Abschluss des Ausstoßvorgangs,

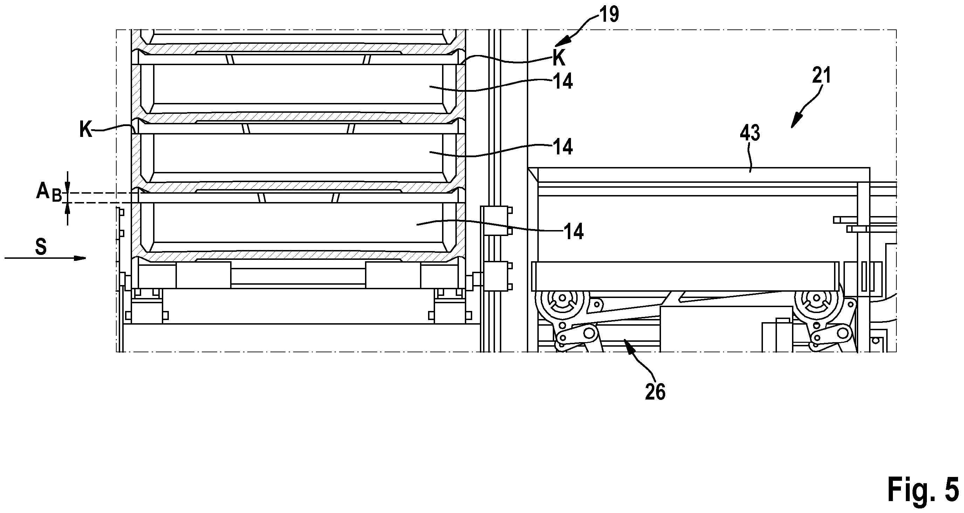

- Fig. 5: eine vergrößerte Darstellung der Entladestation mit Aufnahmeeinrichtung, wobei sich der unterste Transportbehälter in Ausstoßposition vor dem Ausstoßvorgang befindet,

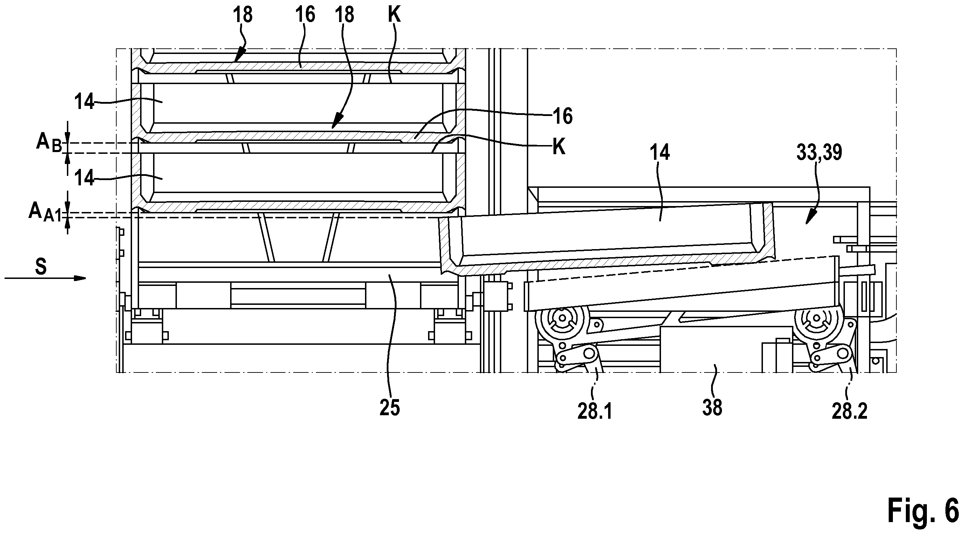

- Fig. 6: die Entladestation mit Aufnahmeeinrichtung gemäß Figur 5, wobei sich der unterste Transportbehälter kurz vor Abschluss des Ausstoßvorgangs befindet,
- Fig. 7: eine schematische Darstellung der Entladestation im Schnitt, wobei sich der unterste Transportbehälter im Ausstoßvorgang befindet,
- Fig. 8: die Entladestation gemäß Figur 7, wobei sich der unterste Transportbehälter kurz vor Abschluss des Ausstoßvorgangs befindet,
- Fig. 9: eine Ausschnittvergrößerung des Austrittsbereichs der Entladestation, wobei sich der unterste Transportbehälter kurz vor Abschluss des Ausstoßvorgangs befindet,
- Fig. 10: den Austrittsbereich gemäß Figur 9, wobei der unterste Transportbehälter den Ausstoßvorgang nahezu abgeschlossen hat,
- Fig. 11: eine schematische Darstellung der Aufnahmeeinrichtung in perspektivischer Darstellung, und

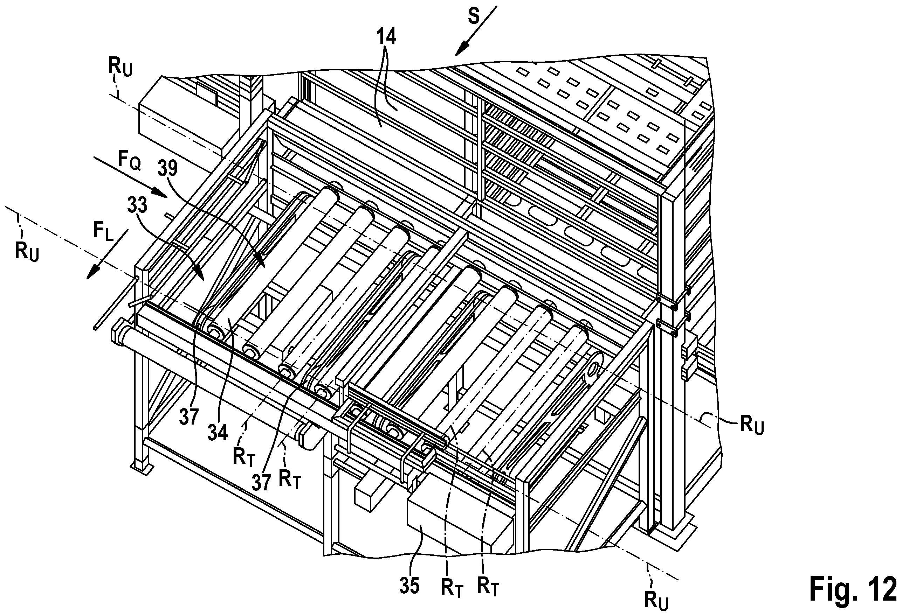

- Fig. 12: eine weitere Ansicht der Aufnahmeeinrichtung gemäß Figur 11.

Das in der Zeichnung dargestellte Entladesystem dient zum Entladen von mehreren übereinander in einem Rahmengestell gelagerten und mit Lebendgeflügel gefüllten Transportbehältern, beginnend mit dem untersten Transportbehälter. Das erfindungsgemäße Entladesystem ist jedoch in gleicher Weise zum stapelweisen Entladen - und zwar gleichzeitig oder zeitversetzt - von mehreren Transportbehältern einer oder mehrerer Transporteinheiten geeignet und ausgebildet.

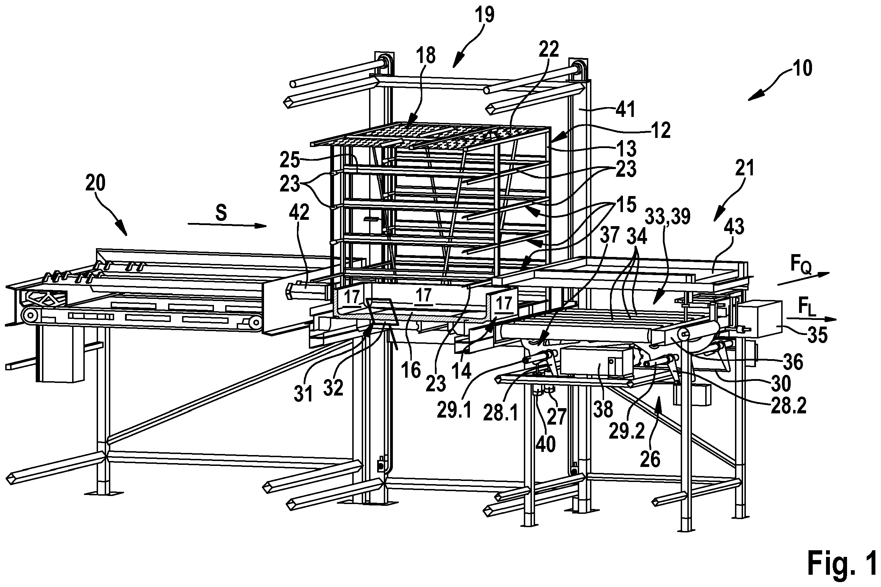

In der Zeichnung, insbesondere den Figuren 1 bis 4, ist ein Entladesystem 10 dargestellt, das zum Entladen wenigstens einer zum Transport und/oder zum Lagern von lebendigen Geflügeltieren 11 eingerichteten Transporteinheit 12 ausgebildet und eingerichtet ist. Jede Transporteinheit 12 weist wenigstens ein Rahmengestell 13 und wenigstens einen darin gelagerten Transportbehälter 14 zum Aufnehmen der Geflügeltiere 11 auf. Das Rahmengestell 13 umfasst für jeden Transportbehälter 14 eine Transportsicherung 15. Jeder nach oben offene Transportbehälter 14 weist einen Behälterboden 16 und umlaufende Seitenwände 17 auf. Jeder im Rahmengestell 13 gelagerte Transportbehälter 14 ist nach oben durch eine Abdeckung 18 abgedeckt, die beabstandet zur oberen Kante K der Seitenwände 17 angeordnet ist. Das Entladesystem 10 umfasst eine Entladestation 19 für mindestens eine Transporteinheit 12, mindestens eine Transporteinheit 12, eine Stoßeinrichtung 20 zum Ausstoßen jedes sich in einer Ausstoßposition befindlichen Transportbehälters 14 aus dem Rahmengestell 13 in Stoßrichtung S, und eine Aufnahmeeinrichtung 21 zum Aufnehmen und Fördern jedes aus dem Rahmengestell 13 ausgestoßenen Transportbehälters 14.

Wie erwähnt, umfass die Transporteinheit 12 erfindungsgemäß mindestens einen Transportbehälter 14. In der dargestellten, bevorzugten Ausführungsform sind mehrere übereinander gelagerte Transportbehälter 14 Bestandteil einer Transporteinheit 12, wobei sich der jeweils unterste Transportbehälter 14 in der Ausstoßposition befindet. Abweichend von der dargestellten Ausführungsform kann die Ausstoßposition auch variieren. Insbesondere können sich auch alle Transportbehälter 14 einer Transporteinheit 12 oder Transportbehälter 14 mehrerer nebeneinander angeordneter Transporteinheiten 12 gleichzeitig in einer Ausstoßposition befinden.

Diese Entladestation 10 zeichnet sich erfindungsgemäß dadurch aus, dass die Position jedes sich in der Ausstoßposition befindlichen Transportbehälters 14 in Bezug auf die Abdeckung 18 in vertikaler Richtung während des gesamten Ausstoßvorgangs steuerbar ist, derart, dass der maximale Abstand A_{B} zwischen der oberen Kante K der in Stoßrichtung S nachlaufenden Seitenwände 17 jedes Transportbehälters 14 und der Abdeckung 18 in Abhängigkeit der jeweiligen Position des Transportbehälters 14 innerhalb des Rahmengestells 13 während des Ausstoßvorgangs einhaltbar ist. Anders ausgedrückt weist das Entladesystem 10 Mittel auf, mit denen jeder in der Ausstoßposition befindliche Transportbehälter 14 zusätzlich zur Stoßeinrichtung 20 bewegt werden kann, wobei die Stoßeinrichtung 20 im Wesentlichen zur horizontalen Bewegung ausgebildet und eingerichtet ist, während die genannten Mittel zur vertikalen Bewegung ausgebildet und eingerichtet sind. Durch die Mittel können Veränderungen im Abstand zwischen oberer Kante K der Seitenwände 17 und der Abdeckung 18, bedingt durch den Ausstoßvorgang, ausgeglichen werden, indem Einfluss auf die Bewegungsbahn der Transportbehälter 14 während des Ausstoßvorgangs genommen wird. Die Mittel können der Stoßeinrichtung 20, der Entladestation 19 und insbesondere der Aufnahmeeinrichtung 21 zugeordnet sein (siehe hierzu weiter unten).

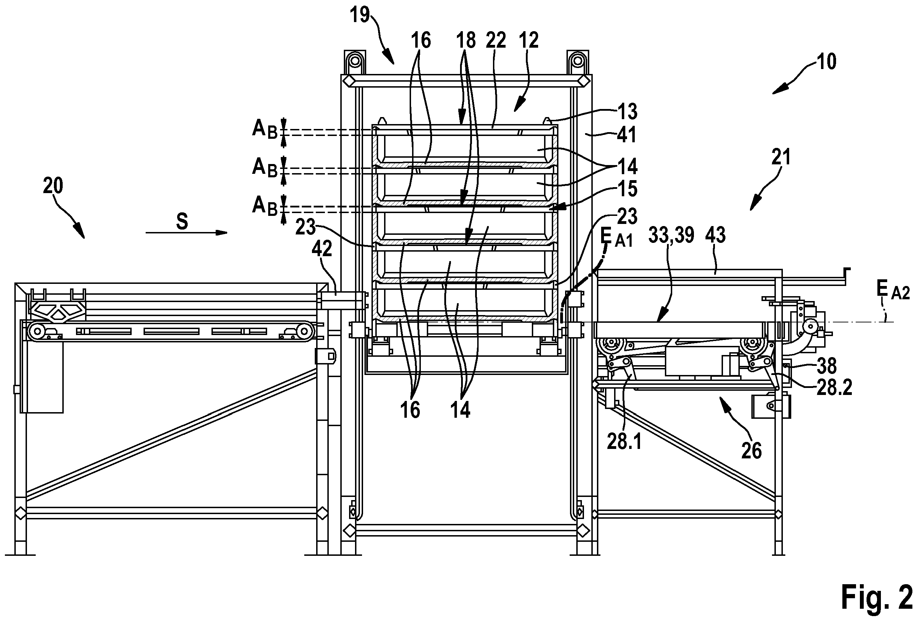

Der maximale Abstand A_{B} ist der (Basis-)Abstand zwischen der oberen Kante K der Seitenwände 17 und der darüber befindlichen Abdeckung 18. In der Figur 2 befinden sich optional fünf Transportbehälter 14 als Stapel übereinander gelagert im Rahmengestell 13, und zwar in der ursprünglichen Transport- oder Lagerposition der Transportbehälter 14 im Rahmengestell 13, also vor dem Beginn des Ausstoßvorgangs, wobei zwischen der oberen Kante K der Seitenwände 17 und der jeweils darüber befindlichen Abdeckung 18 ein Spalt mit dem Abstand A_{B} gebildet ist.

Die im Folgenden beschriebenen Merkmale und Weiterbildungen sowie Verfahrensschritte stellen für sich betrachtet oder in Kombination miteinander bevorzugte Ausführungsformen dar. Es wird ausdrücklich darauf hingewiesen, dass Merkmale und Verfahrensschritte, die in den Ansprüchen und/oder der Beschreibung und/oder der Zeichnung zusammengefasst oder in einer gemeinsamen Ausführungsform beschrieben sind, auch funktional eigenständig die weiter oben beschriebene Entladestation sowie das weiter unten beschriebene Verfahren weiterbilden können.

Bevorzugt ist jede Transporteinheit 12 quaderförmig ausgebildet ist. Andere geometrische Formen, die ein platzsparendes Transportieren und Lagern ermöglichen, sind ebenfalls möglich. Jedes Rahmengestell 13 ist zur Aufnahme von mindestens zwei übereinander angeordneten Transportbehältern 14 ausgebildet und eingerichtet. Diese sind vorzugsweise ebenfalls quaderförmig ausgebildet. Wie erwähnt, sind in der dargestellten Ausführungsform fünf Transportbehälter 14 übereinander angeordnet. Die Anzahl der übereinander angeordneten Transportbehälter 14 kann variieren. Es können auch Rahmengestelle 13 vorgesehen sein, die zum Aufnehmen von zwei oder mehr nebeneinander angeordneten Stapeln aus jeweils zwei oder mehr Transportbehältern 14 ausgebildet und eingerichtet sind. In einem aus Transportbehältern 14 gebildeten Stapel bildet der Behälterboden 16 eines Transportbehälters 14 für den jeweils darunter gelagerten Transportbehälter 14 die Abdeckung 18, und der an oberster Position im Rahmengestell 13 gelagerte Transportbehälter 14 ist durch ein dem Rahmengestell 13 zugeordnetes Deckelelement 22 als Abdeckung 18 abgedeckt.

Das Rahmengestell 13 umfasst eine der Stoßeinrichtung 20 zugewandte erste Gestellseite und eine dieser gegenüberliegende, der Aufnahmeeinrichtung 21 zugewandte zweite Gestellseite auf. Das Rahmengestell 13 umfasst weiterhin auf beiden Gestellseiten für jeden Transportbehälter 14 quer zur Stoßrichtung S der Transportbehälter 14 ausgerichtete Querstreben 23 als Transportsicherung 15, die mit korrespondierenden Ausformungen 24 im Behälterboden 16 jedes Transportbehälters 14 zusammenwirken. Des Weiteren umfasst das Rahmengestell 13 für jeden Transportbehälter 14 parallel zur Stoßrichtung S der Transportbehälter 14 seitlich am Rahmengestell 13 angeordnete Führungsschienen 25 zum Führen der Transportbehälter 14 innerhalb des Rahmengestells 13. Der vertikale Abstand A zwischen den übereinander angeordneten Querstreben 23 einerseits und zwischen den obersten Querstreben 23 und dem Deckelelement 22 des Rahmengestells 13 andererseits ist mindestens auf der zweiten, der Aufnahmeeinrichtung 21 zugewandten Gestellseite jeweils größer als die Gesamthöhe eines Transportbehälters 14. Diese konstruktive Ausgestaltung ermöglicht zum einen einen sicheren Transport und zum anderen ein einfaches Ausstoßen.

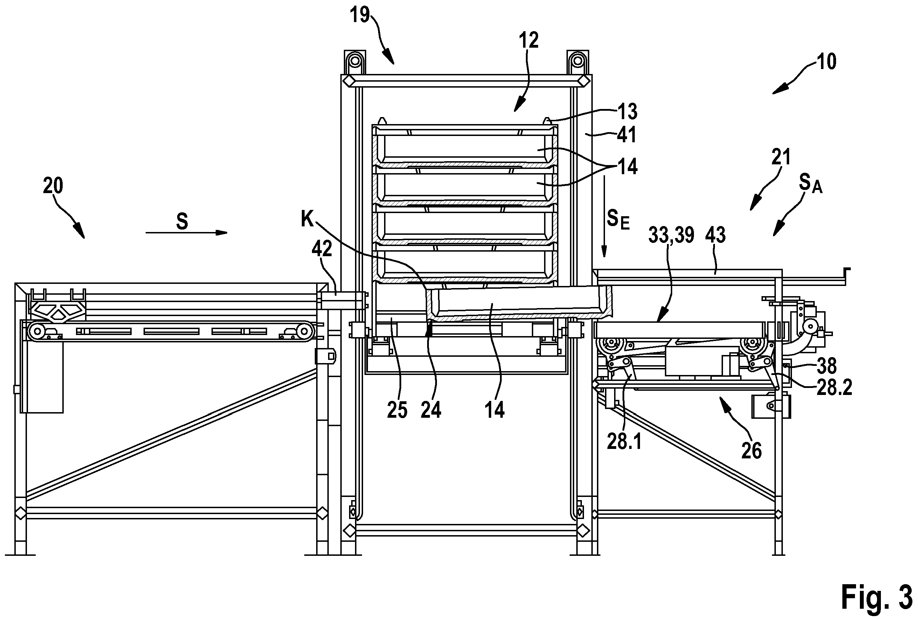

Die Ausformungen 24 im Behälterboden 16 sind bevorzugt Abschrägungen, die sich über die gesamte Breite der Transportbehälter 14 quer zur Stoßrichtung S erstrecken und ausgehend von der unteren Bodenfläche des Behälterbodens 16 schräg nach oben laufen. Dadurch weisen die Transportbehälter 14 zu beiden Gestellseiten rampenartige Ausformungen 24 auf. Mit diesen Abschrägungen liegen die Transportbehälter 14 an den Querstreben 23 an. In der ursprünglichen Transport- oder Lagerposition vor dem Ausstoßvorgang (siehe z.B. Figur 2), liegen die Transportbehälter 14 seitlich auf den Führungsschienen 25 und zu beiden Gestellseiten auf den Querstreben 23 auf. Wird auf den Transportbehälter 14 eine Belastung ausgeübt, vorzugsweise durch die Stoßeinrichtung 20, gleitet der Transportbehälter 14 mit seinem vorauslaufenden Ende auf seiner Abschrägung nach oben auf die Querstrebe 23, so dass der Transportbehälter 14 mit seinem Behälterboden 16 auf der Querstrebe 23 entlanggleitet und mit dem vorauslaufenden Ende höher steht als mit seinem nachlaufenden Ende (siehe z.B. Figur 3). Die obere Kante K der nachlaufenden Seitenwand 17 weist weiterhin den maximalen Abstand A_{B} zur Abdeckung 18, in der dargestellten Ausführungsform zum darüber befindlichen Behälterboden 16, auf.

Besonders bevorzugt ist die Aufnahmeeinrichtung 21 zur Veränderung ihrer Höhenposition und/oder ihrer Winkelstellung in Bezug auf die Ausstoßposition jedes Transportbehälters 14 mindestens abschnittsweise verstellbar ausgebildet. In diesem Fall ist der Aufnahmeeinrichtung 21 das Mittel zum Steuern der Transportbehälter 14 zugeordnet, bzw. die Aufnahmeeinrichtung 21 selbst ist das Mittel zum Steuern der Transportbehälter 14. Wie erwähnt, kann die Aufnahmeeinrichtung 21 einen verstellbaren Abschnitt aufweisen. Optional ist die Aufnahmeeinrichtung 21 insgesamt, mindestens jedoch bezüglich ihrer Auflagefläche bewegbar ausgebildet. Der verstellbare Abschnitt erstreckt sich vorzugsweise quer zur Stoßrichtung S über die gesamte Breite der Transportbehälter 14, so dass die Transportbehälter 14 sicher aus dem Rahmengestell 13 übernommen werden können. Die Aufnahmeeinrichtung 21 weist eine der Entladestation 19 zugewandte erste Eintrittsseite S_{E} und eine der Entladestation 19 abgewandte zweite Austrittsseite S_{A} auf, wobei der Aufnahmeeinrichtung 21 ein Verstellmechanismus 26 zugeordnet ist, mittels dem mindestens die der Entladestation 19 abgewandte zweite Austrittsseite S_{A} der Aufnahmeeinrichtung 21 auf und ab bewegbar ausgebildet und eingerichtet ist.

Zur Verstellung der Höhenposition kann die Aufnahmeeinrichtung 21 bzw. mindestens der verstellbare Abschnitt auf der Eintrittsseite S_{E} und der Austrittsseite S_{A} gleichzeitig verstellt werden. So kann die Höhe/der Level der Aufnahmeeinrichtung 21 variiert werden. Zur Verstellung der Winkelstellung kann die Aufnahmeeinrichtung 21 bzw. mindestens der Abschnitt wahlweise auf der Eintrittsseite S_{E} oder der Austrittsseite S_{A} verstellt werden. So kann die Neigung der Aufnahmeeinrichtung 21 variiert werden. Auch eine überlagerte Bewegung zur Verstellung der Höhenposition und der Winkelstellung ist vorgesehen. Die Verstellbewegungen erfolgen relativ zur Ausstoßposition jedes Transportbehälters 14 bzw. zum Transportbehälter 14 selbst, so dass die Verstellbewegungen auf den im Ausstoßprozess befindlichen Transportbehälter 14 übertragbar sind. Anders ausgedrückt kann die Auflagefläche der Aufnahmeeinrichtung 21 bzw. des verstellbaren Abschnitts vertikal zur Ausstoßebene E_{A1} und damit auf den im Ausstoßvorgang befindlichen Transportbehälter 14 zu oder von diesem weg bewegt werden sowie bezüglich ihrer Neigung zum Transportbehälter 14 eingestellt werden.

Wie erwähnt, ist der Verstellmechanismus 26 dazu ausgebildet und eingerichtet, die Aufnahmeeinrichtung 21 bzw. den verstellbaren Abschnitt einseitig, insbesondere auf der Austrittsseite S_{A} der Aufnahmeeinrichtung, zu verstellen, um insbesondere die Neigung bzw. den Neigungswinkel α zwischen der Ausstoßebene E_{A1} und der Aufnahmeebene E_{A2} zu verändern. Bevorzugt ist der Verstellmechanismus 26 jedoch dazu ausgebildet, die Aufnahmeeinrichtung 21 bzw. den verstellbaren Abschnitt beidseitig auf und ab zu bewegen, und zwar beide Seiten gleichzeitig oder beide Seite unabhängig voneinander, um die Neigung/Winkelstellung und die Höhenposition zu verändern. Mit anderen Worten dient der Verstellmechanismus 26 dazu, die Aufnahmeeinrichtung 21 bzw. den verstellbaren Abschnitt aus einer oberen Position in eine untere Position und umgekehrt zu bewegen sowie die Aufnahmeeinrichtung 21 bzw. den verstellbaren Abschnitt aus einer horizontalen Lage in eine in Stoßrichtung S ansteigende Lage und umgekehrt zu bewegen. Dazu kann der Verstellmechanismus 26 ein Antriebsmittel 27 oder mehrere Antriebsmittel 27 umfassen, die synchron oder unabhängig voneinander betätigbar sind.

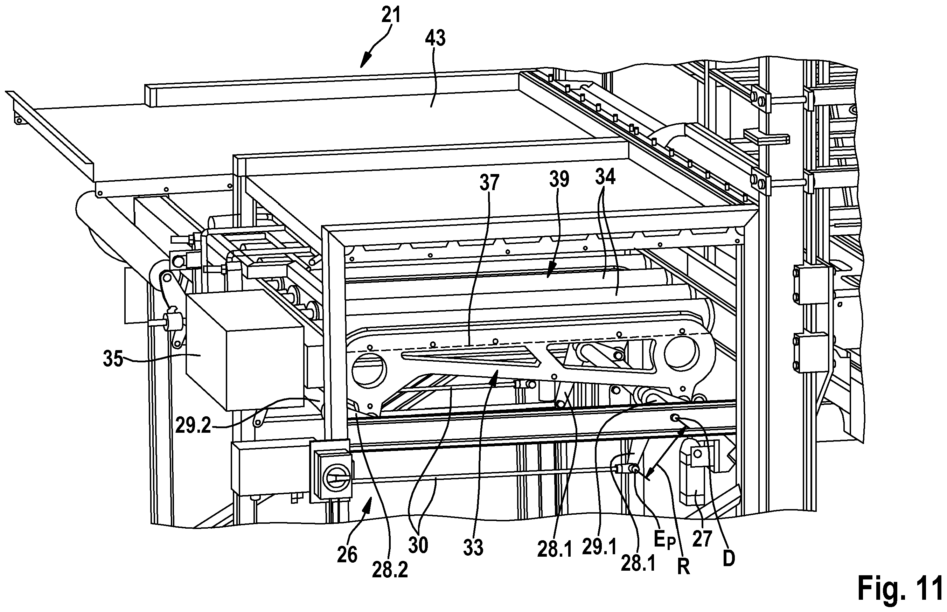

Als Verstellmechanismus 26 kann z.B. mindestens ein Hebel- oder Schwenkarm 28.1 eingesetzt werden, der schwenkbar an einer Schwenkachse 29.1 angeordnet ist und als Exzenter fungiert. In der Figur 11 ist die Schwenkachse 29.1 der Eintrittsseite S_{E} der Aufnahmeeinrichtung 21 zugeordnet. An der Austrittsseite S_{A} der Aufnahmeeinrichtung 21 ist ebenfalls eine Schwenkachse 29.2 mit entsprechenden Hebel- oder Schwenkarmen 28.2 vorgesehen. Die Hebel- oder Schwenkarme 28.1, 28.2 können mit gleicher oder unterschiedlicher Übersetzung/Teilung R (Abstand Mittelpunkt Drehachse D der Schwenkachse zu Exzenterpunkt E_{P}) ausgebildet sein. Die Schwenkachsen 29.1, 29.2 können separat angeordnet sein und betätigt werden. In der dargestellten Ausführungsform (siehe z.B. Figur 11) sind die Schwenkachsen 29.1, 29.2 mittels mindestens einer, vorzugsweise zwei Kopplungsstangen 30 oder dergleichen in Verbindung miteinander. Die Länge der oder jeder Kopplungsstange 30 kann in Abhängigkeit des erforderlichen Hebehubs variieren. Selbstverständlich sind als Verstellmechanismus 26 andere konstruktive Lösungen mechanischer, hydraulischer, pneumatischer und elektronischer Art sowie Kombinationslösungen daraus ebenfalls einsetzbar, z.B. in Form von gesteuerten Pneumatik- oder Hydraulikzylindern, Schrittmotoren oder dergleichen.

Zum Steuern des Verstellmechanismus 26 umfasst das Entladesystem 10 eine Steuerungseinrichtung 31, die zum Steuern des Verstellmechanismus 26 in Abhängigkeit der Position jedes Transportbehälters 14 innerhalb des Rahmengestells 13 während des Ausstoßvorgangs ausgebildet und eingerichtet ist. Die Steuerungseinrichtung 31 kann auf unterschiedliche Weise realisiert bzw. ausgebildet und eingerichtet sein. Beispielsweise kann eine mechanische Kopplung des Verstellmechanismus 26 an die Stoßeinrichtung 20 vorgesehen sein, so dass mittels der bzw. via die Stoßeinrichtung 20 die Verstellung der Aufnahmeeinrichtung 21 ausführbar ist. Es ist des Weiteren eine elektronische Kopplung bzw. Steuerung der Aufnahmeeinrichtung 21 bzw. des Verstellmechanismus 26 möglich. Dazu umfasst die Steuerungseinrichtung 31 beispielsweise Timer, Tachometer, Sensoren oder andere Detektionsmittel, durch die die jeweilige Position des Transportbehälters 14 während des Ausstoßvorgangs ermittelbar und z.B. mit Hilfe einer Steuereinheit 32 auswertbar ist, so dass in Abhängigkeit der Position des Transportbehälters 14 der Verstellmechanismus 26 betätigbar ist. Neben der Zuordnung der Steuerungseinrichtung 31 zu der Stoßeinrichtung 20 kann die Steuerungseinrichtung 31 auch der Entladestation 19 und/oder der Aufnahmeeinrichtung 21 selbst zugeordnet sein. Im Bereich der Entladestation 19 können z.B. Sensoren angeordnet sein, mittels denen die jeweilige Position der Transportbehälter 14 während des Ausstoßprozesses ermittelbar und zu Steuerungszwecken auswertbar ist. Auch im Bereich der Aufnahmeeinrichtung 21 können Sensoren vorgesehen sein, mittels denen z.B. die horizontale Lage/Position der Transportbehälter 14 und/oder der Fortschritt des Ausstoßvorgangs überwacht wird. Andere Überwachungs- oder Detektionssysteme sind ebenso einsetzbar und bezüglich ihrer Positionierung am Entladesystem 10 variabel.

Vorzugsweise umfasst die Aufnahmeeinrichtung 21 einen Aufnahmetisch 33 zum Aufnehmen der Transportbehälter 14 während des Ausstoßvorgangs, der mittels des Verstellmechanismus 26 bezüglich seiner Höhenposition und/oder seiner Winkelstellung verstellbar ausgebildet und eingerichtet ist. Der Aufnahmetisch 33 bildet den bewegbaren Abschnitt der Aufnahmeeinrichtung 21.

Eine erste, einfache (nicht explizit dargestellte) Ausführungsform des Aufnahmetisches 33 ist durch einen flachen Gurtförderer oder eine Transportkette gebildet. Eine weitere, bevorzugte Ausführungsform des Aufnahmetisches 33 ist aus mehreren parallel und beabstandet zueinander angeordneten Transportrollen 34 gebildet, die mittels eines Antriebsmittels 35 rotierend antreibbar sind. Die Transportrollen 34 können einzeln verstellbar ausgebildet sein. Bevorzugt sind die Transportrollen 34 an einem Rahmen 36 angeordnet, der verstellbar ausgebildet ist. Die Transportrollen 34 können z.B. gemäß Figur 1 mit ihrer Rotationsachse R_{T} in Stoßrichtung S ausgerichtet sein (zum Fördern der Transportbehälter 14 quer zur Stoßrichtung S) oder quer zur Stoßrichtung S ausgerichtet sein (zum Fördern der Transportbehälter 14 in Stoßrichtung S). Der Aufnahmetisch 33 zum Stützen und Steuern der Transportbehälter 14 während des Ausstoßprozesses ist gleichzeitig ein Fördertisch zum Fördern der vollständig ausgestoßenen und auf den Transportrollen 34 liegenden Transportbehälter 14.

Eine weitere, bevorzugte Ausführungsform des Aufnahmetisches 33 sieht vor, dass dieser aus mindestens einem Kettentrieb 37, vorzugsweise jedoch aus mindestens zwei beabstandet zueinander angeordneten Kettentrieben 37 gebildet ist, die mittels mindestens eines Antriebsmittels 38 antreibbar sind. Die beiden Kettentriebe 37 sind bevorzugt synchron mittels des Verstellmechanismus 26 verstellbar ausgebildet. Die Rotationsachsen R_{U} der Umlenk- oder Antriebsräder für die Kettentriebe 37 sind bevorzugt quer zur Stoßrichtung S ausgerichtet, so dass die Antriebs- und Förderrichtung der Kettentriebe 37 in Stoßrichtung S ausgerichtet ist. Die vom Aufnahmetisch 33 übernommenen Transportbehälter 14 können dann in Stoßrichtung S weiter gefördert werden. Der Aufnahmetisch 33 zum Stützen und Steuern der Transportbehälter 14 während des Ausstoßprozesses ist gleichzeitig ein Fördertisch zum Fördern der vollständig ausgestoßenen und auf den Kettentrieben 37 liegenden Transportbehälter 14.

Besonders bevorzugt ist dem Aufnahmetisch 33 ein separater Fördertisch 39 zum Abfördern der vollständig ausgestoßenen Transportbehälter 14 zugeordnet, wobei der Fördertisch 39 und der Aufnahmetisch 33 mittels mindestens eines Antriebsmittels 40 mindestens in vertikaler Richtung relativ zueinander bewegbar ausgebildet sind und unterschiedliche Förderrichtungen aufweisen. Für alle Ausführungsformen kann der Aufnahmetisch 33 als Fördertisch 39 und der Fördertisch 39 als Aufnahmetisch 33 ausgebildet sein. Mit anderen Worten können die Kettentriebe 37 als Aufnahmetisch 33 zum Stützen und Steuern der Transportbehälter 14 während des Ausstoßprozesses dienen, während die Transportrollen 34 als Fördertisch zum Fördern der vollständig ausgestoßenen Transportbehälter 14 dienen, und umgekehrt. Die Funktionalitäten von Aufnahmetisch 33 und Fördertisch 39 können jedoch je nach Anwendungsfall getauscht oder variiert werden.

In einer besonders bevorzugten und in der Zeichnung dargestellten Ausführungsform ist der Aufnahmetisch 33 durch die beiden Kettentriebe 37 gebildet, wobei die Rotationsachsen R_{U} der Umlenk- oder Antriebsräder für die Kettentriebe quer zur Stoßrichtung S ausgerichtet sind. Dieser Aufnahmetisch 33 ist in der weiter oben beschriebenen Weise verstellbar ausgebildet, um den Transportbehälter 14 oder den Stapel aus Transportbehältern 14 während des Ausstoßvorgangs zu stützen, zu steuern und vollständig zu übernehmen. Während des Ausstoßvorgangs dient der Aufnahmetisch 33 dazu, den oder die Transportbehälter 14 in vertikaler Richtung zu steuern, um den maximalen Abstand zwischen der oberen Kante K der nachlaufenden Seitenwände 17 und der Abdeckung 18 (also Behälterboden 16 oder Deckelelement 22) zu halten. Der Fördertisch 39 ist aus mehreren parallel und beabstandet zueinander angeordneten und ortsfest ausgebildeten Transportrollen 34 gebildet, die mittels eines Antriebsmittels 35 rotierend antreibbar sind. Mit anderen Worten sind die Transportrollen 34 in dieser Ausführungsform permanent in einer im Wesentlichen horizontalen Ebene ausgerichtet und angeordnet sowie ausschließlich zum Fördern der vollständig aus dem Rahmengestellt 13 ausgestoßenen Transportbehälter 14 ausgebildet und eingerichtet. Die horizontale Ausrichtung der Rotationsachse R_{T} verläuft in Stoßrichtung S.

In weiteren Ausführungsformen kann der verstellbare Aufnahmetisch 33 durch die Transportrollen 14 gebildet sein, während der Fördertisch 39 durch die dann ortsfesten Kettentriebe 37 gebildet ist. Mit dem oder jedem Antriebsmittel 40 ist eine Lifteinrichtung betätigbar, so dass die Oberfläche des Aufnahmetisches 33 wahlweise oberhalb oder unterhalb der Oberfläche des Fördertisches 39 liegen kann. Dem Aufnahmetisch 33 und dem Fördertisch 39 können jeweils auch eigene Lifteinrichtungen mit einem separaten Antriebsmittel 40 zugeordnet sein. Allen Aufnahmetischen 33 und/oder Fördertischen 39 ist unabhängig von ihrer Ausbildung und zugewiesenen Funktion eine Abdeckung 43 zugeordnet, um die Transportbehälter 14 nach oben hin abzudecken.

Insbesondere für den Fall, dass das Rahmengestell 13 zur Aufnahme von zwei oder mehr Transportbehältern 14 übereinander ausgebildet und eingerichtet ist, ist der Entladestation 19 eine Lifteinheit 41 zum vertikalen Bewegen des Rahmengestells 13 in die jeweilige Ausstoßposition für die Transportbehälter 14 zugeordnet. Mittels der Lifteinrichtung 41 können die übereinander angeordneten Transportbehälter 14 nacheinander in ihre Ausstoßposition gebracht werden. Optional kann auch die Aufnahmeeinrichtung 21 ergänzend zur auf und ab Bewegbarkeit des Aufnahmetisches 33/Fördertisches 39 höhenverstellbar ausgebildet sein, derart, dass die Aufnahmeeinrichtung 21 ausgehend von oben oder unten nach und nach in die einzelnen Ebenen der Transportbehälter 14 eines Stapels bewegbar ist, um diese aufzunehmen.

Zum Ausstoßen eines einzelnen Transportbehälters 14 oder mehrerer Transportbehälter 14 umfasst die Stoßeinrichtung 20 mindestens einen Stößel 42. Der Stößel kann zum Ausstoßen eines einzelnen Transportbehälters 14 einen einzelnen Stößelarm aufweisen. Optional kann der Stößel 42 auch mit mehreren Stößelarmen, beispielsweise entsprechend der Anzahl der Stapelebenen, ausgestattet sein. Für den Fall, dass alle Stößelarme fest am Stößel 42 angeordnet sind, erfolgt die Betätigung mittels eines gemeinsamen Stößelantriebs. Die Stößelarme können alternativ auch separat ausgebildet sein, so dass jedem Stößelarm ein eigener Stößelantrieb zugeordnet ist, wobei die Stößelantriebe mittels einer Steuerung abgestimmt aufeinander betätigbar sind.

Das Rahmengestell 13 kann auch zur Aufnahme und Lagerung von mehreren nebeneinander angeordneten Stapeln aus mehreren Transportbehältern 14 ausgebildet und eingerichtet sein. Es können auch mehrere nebeneinander angeordnete Rahmengestelle 13 innerhalb der Entladestation 19 angeordnet sein, die nacheinander oder zeitlich entladen werden können.

Im Folgenden wird das Verfahren anhand der Zeichnung näher erläutert:
Die Erfindung befasst sich mit Verfahren zum Entladen von wenigstens einer zum Transport und/oder Lagern von lebendigen Geflügeltieren eingerichteten Transporteinheit 12, die wenigsten ein Rahmengestell 13 und wenigstens einen darin gelagerten Transportbehälter 14 zum Aufnehmen der Geflügeltiere aufweist, wobei jeder nach oben offene Transportbehälter 14 einen Behälterboden 16 und umlaufende Seitenwände 17 aufweist und jeder im Rahmengestell 13 gelagerte Transportbehälter 14 nach oben durch eine Abdeckung 18 abgedeckt ist, die beabstandet zur oberen Kante K der Seitenwände 17 angeordnet ist. Für das Entladen einer solchen Transporteinheit 12 ist es zunächst notwendig, mindestens eine Transporteinheit 12 in eine Entladestation 19 einzuführen. Dann erfolgt das Ausstoßen mindestens eines in Ausstoßposition befindlichen Transportbehälters 14 aus dem Rahmengestell 13 in Stoßrichtung S mittels einer Stoßeinrichtung 20. Schließlich wird jeder aus dem Rahmengestell 13 ausgestoßene Transportbehälter 14 mittels einer Aufnahmeeinrichtung 21 aufgenommen und gefördert. Mehrere Transportbehälter 14 eines Stapels werden vollständig nacheinander, z.B. von unten nach oben, ausgestoßen, so dass ein einzelner Transportbehälter 14 auf der Aufnahmeeinrichtung 21 liegt und in Stoßrichtung S oder quer zur Stoßrichtung S zur weiteren Verarbeitung gefördert wird. Optional können auch alle Transportbehälter 14 eines Stapels gleichzeitig oder zeitversetzt ausgestoßen werden, so dass im Ergebnis ein Stapel von Transportbehältern 14 auf der Aufnahmeeinrichtung 21 liegt und in Stoßrichtung S oder quer zur Stoßrichtung S zur weiteren Verarbeitung gefördert wird.

Erfindungsgemäß wird die Position jedes sich in der Ausstoßposition befindlichen Transportbehälters 14 in Bezug auf die Abdeckung 18 in vertikaler Richtung während des gesamten Ausstoßvorgangs aktiv gesteuert, derart, dass der maximale Abstand A_{B} zwischen der oberen Kante K der in Stoßrichtung S nachlaufenden Seitenwände 17 jedes Transportbehälters 14 und der Abdeckung 18 in Abhängigkeit der jeweiligen Position des Transportbehälters 14 innerhalb des Rahmengestells 13 während des Ausstoßvorgangs eingehalten wird. Genauer wird jeder Transportbehälter 14 auf einer Bewegungsbahn so gesteuert, dass er mit seinem nachlaufenden Ende so lange wie möglich auf den Führungsschienen 25 des Rahmengestells 13 entlanggleitet, um den Abstand A_{B} zu halten.

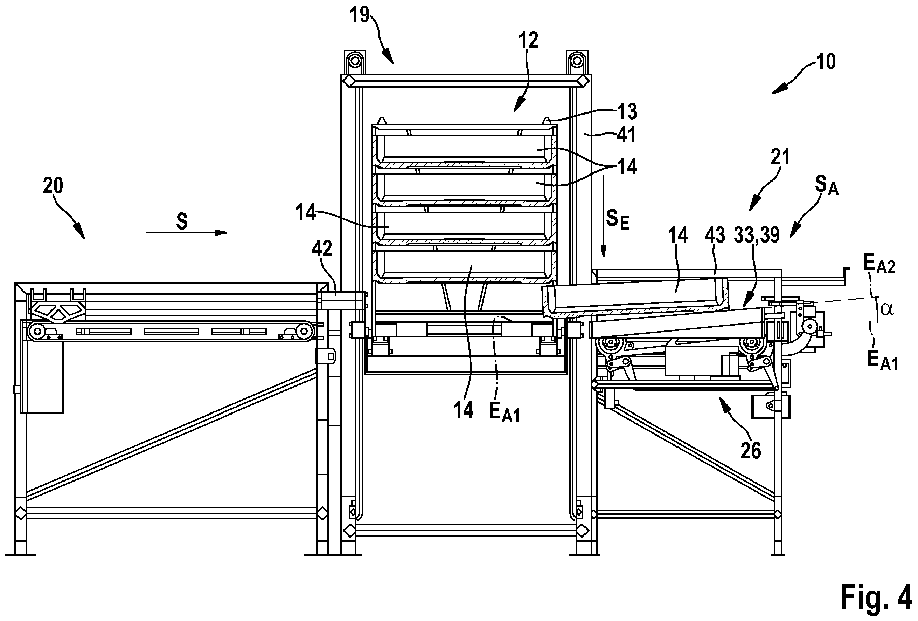

Zunächst liegt ein Transportbehälter 14, oder wie z.B. in der Figur 2 mehrere Transportbehälter 14 übereinander, in dem Rahmengestell. Die Transportbehälter 14 bilden im gezeigten Ausführungsbeispiel einen Stapel, wobei sich der unterste Transportbehälter 14 in der Ausstoßposition befindet. Alle Transportbehälter 14 liegen vor ihrem Ausstoßvorgang in ihrer ursprünglichen Transport- und Lagerposition innerhalb des Rahmengestells (siehe Figur 2).Beim Ausstoßvorgang wird das in Stoßrichtung S vorauslaufende Ende jedes Transportbehälters 14 durch das Stoßen des Transportbehälters 14 in Stoßrichtung S gegen eine als Querstrebe 23 ausgebildete Transportsicherung 15 des Rahmengestells 13 zunächst angehoben (siehe Figur 3). Der sich im Ausstoßprozess befindliche Transportbehälter 14 gleitet mit seinem nachlaufenden Ende mit dem Behälterboden 16 auf den Führungsschienen 25, so dass die obere Kante K mindestens der nachlaufenden Seitenwand 17 zu dem darüber liegenden Transportbehälter 14 den maximalen Abstand A_{B} aufweist. Beim Ausstoßen gleitet der Transportbehälter 14 mit seinem Behälterboden 16 auf der Querstrebe 23. Sobald der Transportbehälter 14 etwa hälftig aus dem Rahmengestell 13 ausgestoßen ist, erreicht der Transportbehälter 14 einen Kipppunkt. Spätestens dann, wenn der Transportbehälter 14 mindestens zur Hälfte aus dem Rahmengestell 13 ausgestoßen ist, wird der Transportbehälter 14 mit seinem Behälterboden 16 durch die Aufnahmeeinrichtung 21 aufgenommen (siehe Figur 4) und so weit nach oben gedrückt wird, indem die Aufnahmeeinrichtung 21 nach oben gesteuert wird, dass die obere Kante K der in Stoßrichtung S nachlaufenden Seitenwände 17 des Transportbehälters 14 bis zum Erreichen der Querstrebe 23, auf der er entlanggleitet, in einem maximalen Abstand A_{B} zur Abdeckung gehalten wird. Die Steuerung der Aufnahmeeinrichtung 21 umfasst dabei das Verändern der Höhenposition und/oder der Winkelstellung. Einfach ausgedrückt läuft der Transportbehälter 14 beim Ausstoßvorgang eine Art Rampe hoch, so dass sich das nachlaufende Ende des Transportbehälters 14 bis zum endgültigen Ausstoßen permanent am tiefsten Punkt, nämlich in Kontakt mit den Führungsschienen 25, befindet.

Unmittelbar, nachdem der Transportbehälter 14 vollständig aus dem Rahmengestell 13 herausgestoßen ist, insbesondere der Behälterboden 16 des Transportbehälters 14 mit seiner Bodenfläche die Querstrebe 23, auf der er entlanggleitet, überwunden und verlassen hat (Transportbehälter 14 liegt mit seiner Ausformung 24, also der Abschrägung am nachlaufenden Ende des Transportbehälters 24, noch auf der Querstrebe 23 auf), wird die Aufnahmeeinrichtung 21 zur Vergrößerung des Abstandes zwischen der oberen Kante K der nachlaufenden Seitenwände 17 des Transportbehälters 14 und der darüber befindlichen Querstrebe 23 des Rahmengestells 13 nach unten bewegt, indem die Aufnahmeeinrichtung 21 mindestens auf der dem Rahmengestell 13 zugewandten Seite nach unten gesteuert wird. Mit Abschluss des Ausstoßvorgangs liegt der Transportbehälter 14 oder der aus Transportbehältern 14 gebildete Stapel vollständig auf der Aufnahmeeinrichtung 21 auf und kann wahlweise in Stoßrichtung S oder quer zur Stoßrichtung S weitergefördert werden.

Der gesamte Ausstoßvorgang wird automatisch gesteuert. Neben der Steuerung der Stoßeinrichtung 20 wird die Aufnahmeeinrichtung 21 mittels einer Steuerungseinrichtung 31 in Abhängigkeit der Position jedes Transportbehälters 14 innerhalb des Rahmengestells 13 während des Ausstoßvorgangs automatisch gesteuert. Die Bewegung bzw. die Bewegungsbahn jedes Transportbehälters 14 ist damit nicht nur durch den Ausstoßprozess sondern aktiv auch durch die Aufnahmeeinrichtung 21 beeinflusst. Dadurch, dass die Aufnahmeeinrichtung 21 mittels der Steuerungseinrichtung 31 wahlweise auf der der Entladestation 19 zugewandten Seite und/oder auf der der Entladestation 19 abgewandten Seite auf und/oder ab bewegt wird, so dass jeder Transportbehälter 14 beim Ausstoßvorgang unter Beibehaltung des maximalen Abstandes A_{B} zwischen der oberen Kante K der nachlaufenden Seitenwände 17 des Transportbehälters 14 und der Abdeckung 18 entlang einer individuellen Bewegungsbahn geführt wird, erfolgt eine die Geflügeltiere 11 schonende Endladung.

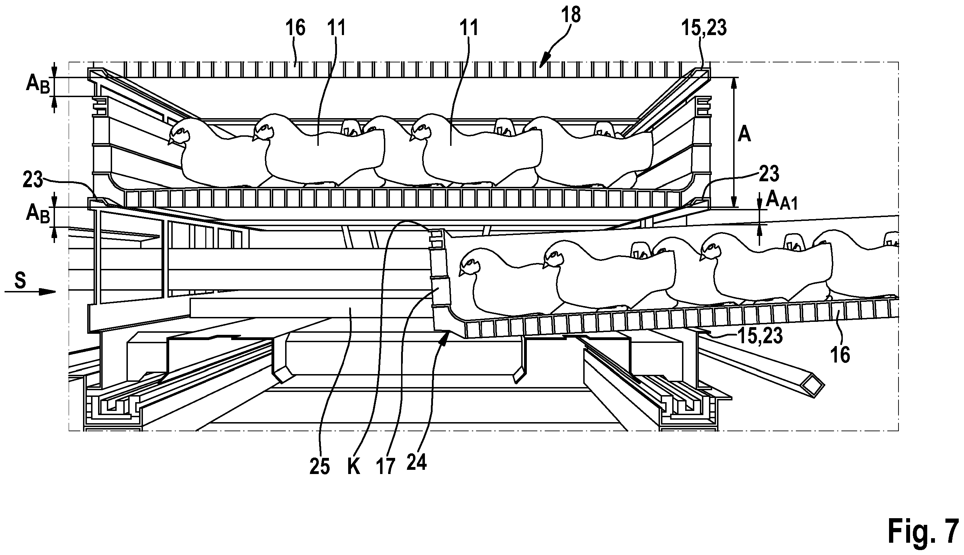

Insbesondere anhand der Figuren 7 bis 10 lässt sich das erfindungsgemäße Verfahrensprinzip deutlich erkennen. Es sind zwei Transportbehälter 14 übereinander angeordnet dargestellt. Ein Transportbehälter 14, in der Figur 7 der obere Transportbehälter 14, befindet sich in seiner ursprünglichen Transport- und Lagerposition und liegt auf den Führungsschienen 25 und den Querstreben 23 auf. Zwischen den übereinander angeordneten Querstreben 23 des Rahmengestells 13 ist ein Abstand A gebildet, der größer ist als die Höhe der Transportbehälter 14, so dass diese in Stoßrichtung S aus dem Rahmengestell 13 ausgestoßen werden können. In der Figur 7 befindet sich der unterste Transportbehälter 14 mitten im Ausstoßvorgang. Der Transportbehälter 14 ist in Stoßrichtung S schräg nach oben geneigt. Das nachlaufende Ende des Transportbehälters 14 liegt dadurch, dass der Transportbehälter 14 mit seinem vorauslaufenden Ende durch die Aufnahmeeinrichtung 21 nach oben gedrückt wird, auf den Führungsschienen 25 auf. Dadurch ist der Abstand A_{B} zwischen der oberen Kante K der nachlaufenden Seitenwand 17 und dem Behälterboden 16 des darüber liegenden Transportbehälters 14 als Abdeckung 18 maximal. Der Abstand A_{A1} zwischen der oberen Kante K der Seitenwände 17 und der Querstrebe 23 ist konstruktionsbedingt und kleiner als A_{B}.

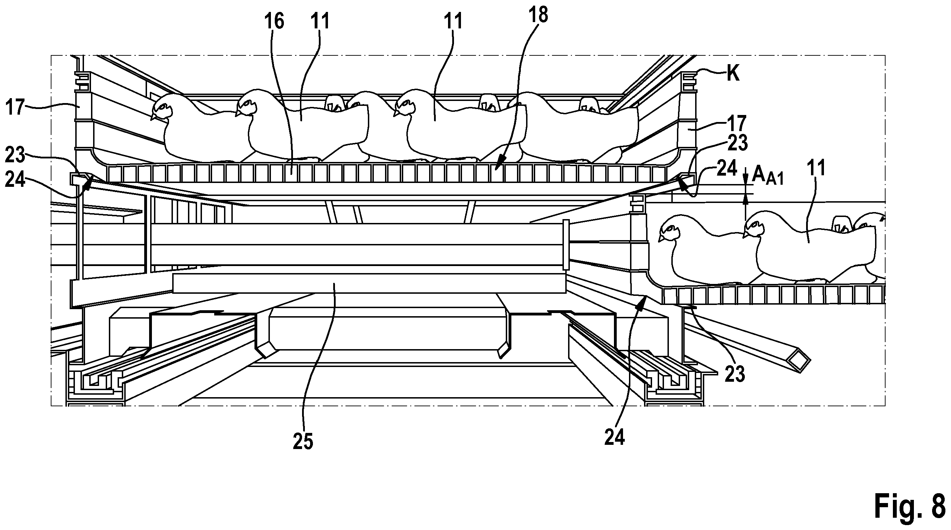

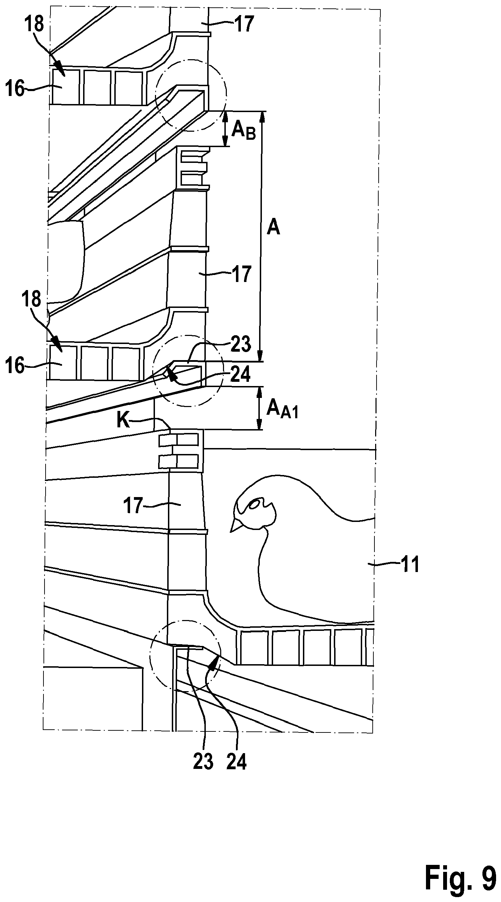

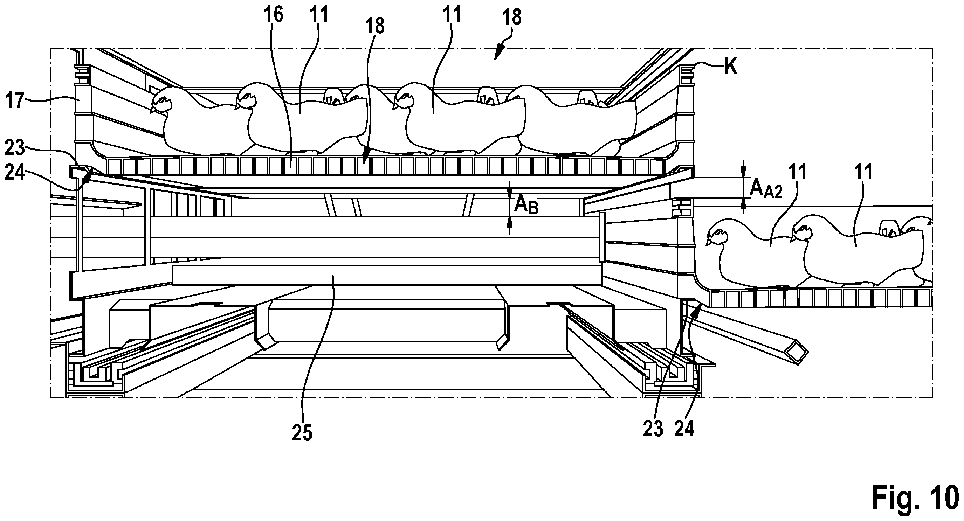

In der Figur 8 ist der Ausstoßvorgang nahezu abgeschlossen. Der Transportbehälter 14 liegt mit seinem nachlaufenden Ende und genauer mit seiner Ausformung 24 des Behälterbodens 16 auf der Querstrebe 23 auf. Dies ist der kurze Moment, in dem der Abstand zwischen der oberen Kante K der nachlaufenden Seitenwand 17 und der Abdeckung 18, gebildet durch den Behälterboden 16 des darüber liegenden Transportbehälters 14, bzw. der Querstrebe 23 minimal ist und A_{A1} beträgt. Dieser Moment ist in Figur 9 noch einmal vergrößert dargestellt. Allerdings gleitet der Transportbehälter 14 auf seiner schrägen Ausformung 24 auf der Querstrebe 23 nach unten, so dass der Abstand A_{A1} auf den Abstand A_{A2} vergrößert wird (siehe Figur 10). Zusätzlich wird die Aufnahmeeinrichtung 21 nach unten bewegt, sobald der Transportbehälter 14 vollständig auf der Aufnahmeeinrichtung 21 liegt. Dadurch, dass die Aufnahmeeinrichtung 21 beim Abholen/Aufnehmen der Transportbehälter 14 während des Ausstoßvorgangs in einer höheren Position und ggf. geneigt ist, und beim vollständigen Verlassen der Transportbehälter 14 aus dem Rahmengestell 13 in einer unteren Position und ggf. horizontal ist, wird zu jedem Moment des Ausstoßvorgangs der maximale Abstand zwischen der oberen Kante K der Seitenwände 17 und der Abdeckung 18 bzw. der Querstrebe 23 eingehalten.

Die auf der Aufnahmeeinrichtung 21 liegenden Transportbehälter 14 können nun zur weiteren Verarbeitung in Stoßrichtung S oder quer zur Stoßrichtung S gefördert werden. Wenn der Aufnahmetisch 33 der Aufnahmeeinrichtung 21 gleichzeitig der Fördertisch 39 ist, erfolgt das Fördern in Abhängigkeit der Ausrichtung der Transportrollen 34 oder der Kettentriebe 37. Für den Fall, dass der Aufnahmetisch 33 separat zum Fördertisch 39 ausgebildet ist, besteht bezüglich der Förderrichtung freie Wahl, nämlich in Stoßrichtung S oder zu beiden Seiten quer zur Stoßrichtung S. In der bevorzugten Ausführungsform gemäß Zeichnung dienen die Kettentriebe 37 als Aufnahmetisch 33. Der Aufnahmetisch 33 stützt und steuert die Transportbehälter 14 während des Ausstoßvorgangs in der weiter oben beschriebenen Weise. Ist der Ausstoßvorgang abgeschlossen, kann der Transportbehälter 14 weiter in Stoßrichtung S mittels der Kettentriebe 37 gefördert werden. Optional können die Kettentriebe 37 aber auch so weit gegenüber dem durch die Transportrollen 34 gebildeten Fördertisch 39 abgesenkt werden, dass der Transportbehälter 14 ausschließlich mit seinem Behälterboden 16 auf den Transportrollen 34 aufliegt, so dass der Transportbehälter 14 dann quer zur Stoßrichtung S, und zwar zu beiden Seiten hin, gefördert werden kann. Anstatt den Aufnahmetisch 33 abzusenken, kann der Fördertisch 39 auch angehoben werden. Das Verfahrensprinzip gilt in gleicher Weise, wenn der Aufnahmetisch 33 durch die Transportrollen 34 und der Fördertisch 39 durch die Kettentriebe 37 gebildet ist.

Das Verfahren wurde zunächst anhand des Ausstoßens und Förderns eines einzelnen Transportbehälters 14 beschrieben. Es können jedoch mehrere in einem Rahmengestell 13 übereinander angeordnete Transportbehälter 14 mittels der Stoßeinrichtung 20 gleichzeitig oder gestaffelt zueinander aus dem Rahmengestell 13 ausgestoßen werden, derart, dass die Transportbehälter 14 einer Transporteinheit 12 auf der Aufnahmeeinrichtung 21 im Stapel direkt aufeinanderliegen. Der Ausstoßvorgang sowie das Fördern erfolgen für einen aus Transportbehältern 14 gebildeten Stapel in entsprechender Weise.

## Patentansprüche

1. Entladesystem (10), ausgebildet und eingerichtet zum Entladen wenigstens einer zum Transport und/oder zum Lagern von lebendigen Geflügeltieren (11) eingerichteten Transporteinheit (12), die wenigstens ein Rahmengestell (13) und wenigstens einen darin gelagerten Transportbehälter (14) zum Aufnehmen der Geflügeltiere (11) aufweist, wobei das Rahmengestell (13) für jeden Transportbehälter (14) eine Transportsicherung (15) umfasst und jeder nach oben offene Transportbehälter (14) einen Behälterboden (16) und umlaufende Seitenwände (17) aufweist und jeder im Rahmengestell (13) gelagerte Transportbehälter (14) nach oben durch eine Abdeckung (18) abgedeckt ist, die beabstandet zur oberen Kante K der Seitenwände (17) angeordnet ist, umfassend eine Entladestation (19) für mindestens eine Transporteinheit (12), mindestens eine Transporteinheit (12), eine Stoßeinrichtung (20) zum Ausstoßen jedes sich in einer Ausstoßposition befindlichen Transportbehälters (14) aus dem Rahmengestell (13) in Stoßrichtung S, und eine Aufnahmeeinrichtung (21) zum Aufnehmen und Fördern jedes aus dem Rahmengestell (13) ausgestoßenen Transportbehälters (14), **dadurch gekennzeichnet, dass** die Position jedes sich in der Ausstoßposition befindlichen Transportbehälters (14) in Bezug auf die Abdeckung (18) in vertikaler Richtung während des gesamten Ausstoßvorgangs steuerbar ist, derart, dass der maximale Abstand A_{B} zwischen der oberen Kante K der in Stoßrichtung S nachlaufenden Seitenwände (17) jedes Transportbehälters (14) und der Abdeckung (18) in Abhängigkeit der jeweiligen Position des Transportbehälters (14) innerhalb des Rahmengestells (13) während des Ausstoßvorgangs einhaltbar ist.

2. Entladesystem (10) nach Anspruch 1, **dadurch gekennzeichnet, dass** jede Transporteinheit (12) quaderförmig ausgebildet ist, wobei jedes Rahmengestell (13) zur Aufnahme von mindestens zwei übereinander angeordneten Transportbehältern (14) ausgebildet und eingerichtet ist, so dass der Behälterboden (16) eines Transportbehälters (14) für den jeweils darunter gelagerten Transportbehälter (14) die Abdeckung (18) bildet und der an oberster Position im Rahmengestell (13) gelagerte Transportbehälter (14) durch ein dem Rahmengestell (13) zugeordnetes Deckelelement (22) als Abdeckung (18) abgedeckt ist, und eine der Stoßeinrichtung (20) zugewandte erste Gestellseite und eine dieser gegenüberliegende, der Aufnahmeeinrichtung (21) zugewandte zweite Gestellseite aufweist und auf beiden Gestellseiten für jeden Transportbehälter (14) quer zur Stoßrichtung S der Transportbehälter (14) ausgerichtete Querstreben (23) als Transportsicherung (15) umfasst, die mit korrespondierenden Ausformungen (24) im Behälterboden (16) jedes Transportbehälters (14) zusammenwirken, und für jeden Transportbehälter (14) parallel zur Stoßrichtung S der Transportbehälter (14) seitlich am Rahmengestell (13) angeordnete Führungsschienen (25) zum Führen der Transportbehälter (14) innerhalb des Rahmengestells (13) umfasst, wobei der vertikale Abstand A zwischen den übereinander angeordneten Querstreben (23) einerseits und zwischen den obersten Querstreben (23) und dem Deckelelement (22) des Rahmengestells (13) andererseits mindestens auf der zweiten, der Aufnahmeeinrichtung (21) zugewandten Gestellseite jeweils größer ist als die Gesamthöhe eines Transportbehälters (14).

3. Entladesystem (10) nach Anspruch 1 oder 2, **dadurch gekennzeichnet, dass** die Aufnahmeeinrichtung (21) zur Veränderung ihrer Höhenposition und/oder ihrer Winkelstellung in Bezug auf die Ausstoßposition jedes Transportbehälters (14) mindestens abschnittsweise verstellbar ausgebildet ist.

4. Entladesystem (10) nach einem oder mehreren der Ansprüche 1 bis 3, **dadurch gekennzeichnet, dass** die Aufnahmeeinrichtung (21) eine der Entladestation (19) zugewandte erste Eintrittsseite S_{E} und eine der Entladestation (19) abgewandte zweite Austrittsseite S_{A} aufweist, wobei der Aufnahmeeinrichtung (21) ein Verstellmechanismus (26) zugeordnet ist, mittels dem mindestens die der Entladestation (19) abgewandte zweite Austrittsseite S_{A} der Aufnahmeeinrichtung (21) auf und ab bewegbar ausgebildet und eingerichtet ist.

5. Entladesystem (10) nach Anspruch 4, **dadurch gekennzeichnet, dass** die Aufnahmeeinrichtung (21) mittels des Verstellmechanismus (26) an beiden Seiten auf und ab bewegbar ausgebildet und eingerichtet ist.

6. Entladesystem (10) nach Anspruch 4 oder 5, **dadurch gekennzeichnet, dass** es eine Steuerungseinrichtung (31) umfasst, die zum Steuern des Verstellmechanismus (26) in Abhängigkeit der Position jedes Transportbehälters (14) innerhalb des Rahmengestells (13) während des Ausstoßvorgangs ausgebildet und eingerichtet ist.

7. Entladesystem (10) nach einem oder mehreren der Ansprüche 4 bis 6, **dadurch gekennzeichnet, dass** die Aufnahmeeinrichtung (21) einen Aufnahmetisch (33) zum Aufnehmen der Transportbehälter (14) während des Ausstoßvorgangs umfasst, der mittels des Verstellmechanismus (26) bezüglich seiner Höhenposition und/oder seiner Winkelstellung verstellbar ausgebildet und eingerichtet ist.

8. Entladesystem (10) nach Anspruch 7, **dadurch gekennzeichnet, dass** der Aufnahmetisch (33) aus mehreren parallel und beabstandet zueinander angeordneten Transportrollen (34) gebildet ist, die mittels eines Antriebsmittels (35) rotierend antreibbar sind.

9. Entladesystem (10) nach Anspruch 7, **dadurch gekennzeichnet, dass** der Aufnahmetisch (33) aus mindestens zwei beabstandet zueinander angeordneten Kettentrieben (37) gebildet ist, die mittels eines Antriebsmittels (38) antreibbar sind.

10. Entladesystem (10) nach Anspruch 8 oder 9, **dadurch gekennzeichnet, dass** dem Aufnahmetisch (33) ein Fördertisch (39) zum Abfördern der vollständig ausgestoßenen Transportbehälter (14) zugeordnet ist, wobei der Fördertisch (39) und der Aufnahmetisch (33) mittels mindestens eines Antriebsmittels (40) mindestens in vertikaler Richtung relativ zueinander bewegbar ausgebildet sind und unterschiedliche Förderrichtungen aufweisen.

11. Entladesystem (10) nach Anspruch 10, **dadurch gekennzeichnet, dass** der Fördertisch (39) aus mehreren parallel und beabstandet zueinander angeordneten und ortsfest ausgebildeten Transportrollen (34) gebildet ist, die mittels eines Antriebsmittels (35) rotierend antreibbar sind.

12. Entladesystem (10) nach einem oder mehreren der Ansprüche 1 bis 11, **dadurch gekennzeichnet, dass** der Entladestation (19) eine Lifteinheit (41) zum vertikalen Bewegen des Rahmengestells (13) in die jeweilige Ausstoßposition für die Transportbehälter (14) zugeordnet ist.

13. Entladesystem nach einem oder mehreren der Ansprüche 1 bis 12, **dadurch gekennzeichnet, dass** die Stoßeinrichtung (20) mindestens einen Stößel (42) zum Ausstoßen eines einzelnen Transportbehälters (14) oder mehrerer Transportbehälter (14) umfasst.

14. Verfahren zum Entladen von wenigstens einer zum Transport und/oder Lagern von lebendigen Geflügeltieren eingerichteten Transporteinheit (12), die wenigsten ein Rahmengestell (13) und wenigstens einen darin gelagerten Transportbehälter (14) zum Aufnehmen der Geflügeltiere aufweist, wobei jeder nach oben offene Transportbehälter (14) einen Behälterboden (16) und umlaufende Seitenwände (17) aufweist und jeder im Rahmengestell (13) gelagerte Transportbehälter (14) nach oben durch eine Abdeckung (18) abgedeckt ist, die beabstandet zur oberen Kante K der Seitenwände (17) angeordnet ist, umfassend die Schritte:
- Einführen mindestens einer Transporteinheit (12) in eine Entladestation (19),
- Ausstoßen mindestens eines in Ausstoßposition befindlichen Transportbehälters (14) aus dem Rahmengestell (13) in Stoßrichtung S mittels einer Stoßeinrichtung (20), und
- Aufnehmen und Fördern jedes aus dem Rahmengestell (13) ausgestoßenen Transportbehälters (14) mittels einer Aufnahmeeinrichtung (21),
**dadurch gekennzeichnet, dass** die Position jedes sich in der Ausstoßposition befindlichen Transportbehälters (14) in Bezug auf die Abdeckung (18) in vertikaler Richtung während des gesamten Ausstoßvorgangs aktiv gesteuert wird, derart, dass der maximale Abstand A_{B} zwischen der oberen Kante K der in Stoßrichtung S nachlaufenden Seitenwände (17) jedes Transportbehälters (14) und der Abdeckung (18) in Abhängigkeit der jeweiligen Position des Transportbehälters (14) innerhalb des Rahmengestells (13) während des Ausstoßvorgangs eingehalten wird.

15. Verfahren nach Anspruch 14, **dadurch gekennzeichnet, dass** das in Stoßrichtung S vorauslaufende Ende jedes Transportbehälters (14) durch das Stoßen des Transportbehälters (14) in Stoßrichtung S gegen eine als Querstrebe (23) ausgebildete Transportsicherung (15) des Rahmengestells (13) beim Ausstoßvorgang zunächst angehoben wird, wobei der Transportbehälter (14) spätestens dann, wenn der Transportbehälter (14) mindestens zur Hälfte aus dem Rahmengestell (13) ausgestoßen ist, mit seinem Behälterboden (16) durch die Aufnahmeeinrichtung (21) aufgenommen und so weit nach oben gedrückt wird, indem die Aufnahmeeinrichtung (21) nach oben gesteuert wird, dass die obere Kante K der in Stoßrichtung S nachlaufenden Seitenwände (17) des Transportbehälters (14) bis zum Erreichen der Querstrebe (23), auf der sie entlanggleitet, in einem maximalen Abstand A_{B} zur Abdeckung (18) gehalten wird.

16. Verfahren nach Anspruch 15, **dadurch gekennzeichnet, dass** der Transportbehälter (14) unmittelbar, nachdem er vollständig aus dem Rahmengestell (13) herausgestoßen ist und der Behälterboden (16) des Transportbehälters (14) die Querstrebe (23), auf der er entlanggleitet, überwunden und verlassen hat, zur Vergrößerung des Abstandes zwischen der oberen Kante K der nachlaufenden Seitenwände (17) des Transportbehälters (14) und der darüber befindlichen Querstrebe (23) des Rahmengestells (13) nach unten bewegt wird, indem die Aufnahmeeinrichtung (21) nach unten gesteuert wird.

17. Verfahren nach Anspruch einem oder mehreren der Ansprüche 14 bis 16, **dadurch gekennzeichnet, dass** die vollständig auf der Aufnahmeeinrichtung (21) liegenden Transportbehälter (14) wahlweise in Stoßrichtung S oder quer zur Stoßrichtung S weitergefördert werden.

18. Verfahren nach einem oder mehreren der Ansprüche 14 bis 17, **dadurch gekennzeichnet, dass** die Aufnahmeeinrichtung (21) mittels einer Steuerungseinrichtung (31) in Abhängigkeit der Position jedes Transportbehälters (14) innerhalb des Rahmengestells (13) während des Ausstoßvorgangs automatisch gesteuert wird.

19. Verfahren nach Anspruch 18, **dadurch gekennzeichnet, dass** die Aufnahmeeinrichtung (21) mittels der Steuerungseinrichtung (31) wahlweise auf der der Entladestation (19) zugewandten Seite und/oder auf der der Entladestation (19) abgewandten Seite auf und/oder ab bewegt wird, so dass jeder Transportbehälter (14) beim Ausstoßvorgang unter Beibehaltung des maximalen Abstandes A_{B} zwischen der oberen Kante K der nachlaufenden Seitenwände (17) des Transportbehälters (14) und der Abdeckung (18) entlang einer individuellen Bewegungsbahn geführt wird.

20. Verfahren nach einem oder mehreren der Ansprüche 14 bis 19, **dadurch gekennzeichnet, dass** mehrere in einem Rahmengestell (13) übereinander angeordnete Transportbehälter (14) mittels der Stoßeinrichtung (20) gleichzeitig oder gestaffelt zueinander aus dem Rahmengestell (13) ausgestoßen werden, derart, dass die Transportbehälter (14) einer Transporteinheit (12) auf der Aufnahmeeinrichtung (21) im Stapel direkt aufeinanderliegen.

## Claims

1. Unloading system (10), designed and configured for unloading at least one transport unit (12) which is configured for transporting and/or storing live poultry (11) and has at least one rack (13) and at least one transport crate (14) mounted therein for receiving the poultry (11), wherein the rack (13) comprises a transport restraint (15) for each transport crate (14) and each open-top transport crate (14) has a crate bottom (16) and peripheral side walls (17), and each transport crate (14) mounted in the rack (13) is covered at the top by a cover (18) which is arranged at a distance from the upper edge K of the side walls (17), which system comprises an unloading station (19) for at least one transport unit (12), at least one transport unit (12), a pushing device (20) for ejecting each transport crate (14) situated in an ejection position from the rack (13) in the pushing direction S, and a receiving device (21) for receiving and conveying each transport crate (14) ejected from the rack (13), **characterised in that** the position of each transport crate (14) situated in the ejection position in relation to the cover (18) can be controlled in the vertical direction during the entire ejection operation, in such a manner that the maximum distance A_{B} between the upper edge K of the trailing side walls (17) of each transport crate (14) in the pushing direction S and the cover (18) can be maintained in dependence on the position of the transport crate (14) within the rack (13) during the ejection operation.

2. Unloading system (10) according to claim 1, **characterised in that** each transport unit (12) is in quadrangular form, wherein each rack (13) is designed and configured for receiving at least two transport crates (14) arranged one on top of the other, so that the crate bottom (16) of one transport crate (14) forms the cover (18) for each transport crate (14) located beneath it and the transport crate (14) mounted in the topmost position in the rack (13) is covered by a lid element (22) associated with the rack (13) as the cover (18), and has a first rack side facing the pushing device (20) and a second rack side, opposite the first rack side, facing the receiving device (21) and comprises on both rack sides cross-members (23) oriented transversely to the pushing direction S of the transport crates (14) as a transport restraint (15) for each transport crate (14), which cross-members cooperate with corresponding mouldings (24) in the crate bottom (16) of each transport crate (14), and comprises for each transport crate (14) guide rails (25) arranged laterally on the rack (13) parallel to the pushing direction S of the transport crates (14), for guiding the transport crates (14) within the rack (13), wherein the vertical distance A between the cross-members (23) arranged one above the other, on the one hand, and between the topmost cross-members (23) and the lid element (22) of the rack (13), on the other hand, is in each case greater than the total height of a transport crate (14), at least on the second rack side facing the receiving device (21).

3. Unloading system (10) according to claim 1 or 2, **characterised in that** the receiving device (21) is designed to be adjustable at least in sections in order to change the height position and/or the angular position of the receiving device (21) in relation to the ejection position of each transport crate (14).

4. Unloading system (10) according to one or more of claims 1 to 3, **characterised in that** the receiving device (21) has a first entry side S_{E} facing the unloading station (19) and a second exit side S_{A} facing away from the unloading station (19), wherein the receiving device (21) has an associated adjustment mechanism (26) by means of which at least the second exit side S_{A}, facing away from the unloading station (19) of the receiving device (21) is designed and configured to be movable up and down.

5. Unloading system (10) according to claim 4, **characterised in that** the receiving device (21) is designed and configured to be movable up and down on both sides by means of the adjustment mechanism (26).

6. Unloading system (10) according to claim 4 or 5, **characterised in that** it comprises a control device (31) which is designed and configured to control the adjustment mechanism (26) in dependence on the position of each transport crate (14) within the rack (13) during the ejection operation.

7. Unloading system (10) according to one or more of claims 4 to 6, **characterised in that** the receiving device (21) comprises a receiving table (33) for receiving the transport crates (14) during the ejection operation, which receiving table is designed and configured to be adjustable in respect of its height position and/or its angular position by means of the adjustment mechanism (26).

8. Unloading system (10) according to claim 7, **characterised in that** the receiving table (33) is formed of a plurality of transport rollers (34) which are arranged parallel to and at a distance from one another and can be driven in rotation by means of a drive means (35).

9. Unloading system (10) according to claim 7, **characterised in that** the receiving table (33) is formed of at least two chain drives (37) which are arranged at a distance from one another and can be driven by means of a drive means (38).

10. Unloading system (10) according to claim 8 or 9, **characterised in that** the receiving table (33) has an associated conveying table (39) for conveying away the fully ejected transport crates (14), wherein the conveying table (39) and the receiving table (33) are movable relative to one another at least in the vertical direction by means of at least one drive means (40) and have different conveying directions.

11. Unloading system (10) according to claim 10, **characterised in that** the conveying table (39) is formed of a plurality of transport rollers (34) which are arranged parallel to and at a distance from one another and are fixed in position and which can be driven in rotation by means of a drive means (35).

12. Unloading system (10) according to one or more of claims 1 to 11, **characterised in that** the unloading station (19) has an associated lifting unit (41) for moving the rack (13) vertically into the respective ejection position for the transport crates (14).

13. Unloading system according to one or more of claims 1 to 12, **characterised in that** the pushing device (20) comprises at least one pusher (42) for ejecting a single transport crate (14) or a plurality of transport crates (14).

14. Method of unloading at least one transport unit (12) which is configured for transporting and/or storing live poultry and has at least one rack (13) and at least one transport crate (14) mounted therein for receiving the poultry, wherein each open-top transport crate (14) has a crate bottom (16) and peripheral side walls (17) and each transport crate (14) mounted in the rack (13) is covered at the top by a cover (18) which is arranged at a distance from the upper edge K of the side walls (17), which method comprises the steps:
- introducing at least one transport unit (12) into an unloading station (19),
- ejecting at least one transport crate (14) situated in the ejection position from the rack (13) in the pushing direction S by means of a pushing device (20), and
- receiving and conveying each transport crate (14) ejected from the rack (13) by means of a receiving device (21),
**characterised in that** the position of each transport crate (14) situated in the ejection position in relation to the lid (18) is actively controlled in the vertical direction during the entire ejection operation, in such a manner that the maximum distance A_{B} between the upper edge K of the trailing side walls (17) of each transport crate (14) in the pushing direction S and the cover (18) is maintained in dependence on the position of the transport crate (14) within the rack (13) during the ejection operation.

15. Method according to claim 14, **characterised in that** the leading end of each transport crate (14) in the pushing direction S is first raised during the ejection operation by the pushing of the transport crate (14) in the pushing direction S against a transport restraint (15) of the rack (13) in the form of a cross-member (23), wherein the transport crate (14) is received by its crate bottom (16) by the receiving device (21) at the latest when at least half the transport crate (14) has been ejected from the rack (13) and is pressed so far upwards, by the receiving device (21) being guided upwards, that the upper edge K of the trailing side walls (17) of the transport crate (14) in the pushing direction S is maintained at a maximum distance A_{B} from the cover (18) until it reaches the cross-member (23), along which it slides.

16. Method according to claim 15, **characterised in that** the transport crate (14) is moved downwards, by the receiving device (21) being guided downwards, as soon as it has been fully ejected from the rack (13) and the crate bottom (16) of the transport crate (14) has passed over and left the cross-member (23), along which it slides, in order to increase the distance between the upper edge K of the trailing side walls (17) of the transport crate (14) and the cross-member (23) of the rack (13) located above it.

17. Method according to one or more of claims 14 to 16, **characterised in that** the transport crates (14) located fully on the receiving device (21) are conveyed further either in the pushing direction S or transversely to the pushing direction S.

18. Method according to one or more of claims 14 to 17, **characterised in that** the receiving device (21) is controlled automatically by means of a control device (31) in dependence on the position of each transport crate (14) within the rack (13) during the ejection operation.

19. Method according to claim 18, **characterised in that** the receiving device (21) is moved up and/or down by means of the control device (31) either on the side facing the unloading station (19) and/or on the side facing away from the unloading station (19), so that each transport crate (14) is guided along an individual movement path in the ejection operation while maintaining the maximum distance A_{B} between the upper edge K of the trailing side walls (17) of the transport crate (14) and the cover (18).

20. Method according to one or more of claims 14 to 19, **characterised in that** a plurality of transport crates (14) arranged one above the other in a rack (13) are ejected from the rack (13) by means of the pushing device (20) simultaneously or in a staggered manner relative to one another, in such a manner that the transport crates (14) of a transport unit (12) are located on the receiving device (21) directly on top of one another in a stack.

## Revendications

1. Système de déchargement (10), réalisé et mis au point pour décharger au moins un élément de transport (12), mis au point pour transporter et/ou pour stocker des volailles (11) vivantes, lequel présente au moins un châssis (13) et au moins un récipient de transport (14) disposé dedans pour recevoir les volailles (11), ledit châssis (13) comprenant une sécurité de transport (15) par récipient de transport (14) et chaque récipient de transport (14) ouvert en haut présentant un fond de récipient (16) et des parois latérales (17) sur tout le tour, et chaque récipient de transport (14) disposé dans le châssis (13) étant recouvert, par le haut, par un couvercle (18) qui est agencé à distance de l'arête supérieure K des parois latérales (17), comprenant une station de déchargement (19) pour au moins un élément de transport (12), au moins un élément de transport (12), un moyen de poussée (20) pour éjecter hors du châssis (13) dans le sens de poussée S, chaque récipient de transport (14) qui se trouve dans une position d'éjection, et un moyen d'accueil (21) pour recevoir et acheminer chaque récipient de transport (14) éjecté hors du châssis (13), **caractérisé en ce que** la position de chaque récipient de transport (14) se trouvant en position d'éjection est susceptible d'être commandée dans le sens vertical par rapport au couvercle (18) pendant toute l'opération d'éjection, de sorte que la distance maximale A_{B} entre l'arête supérieure K des parois latérales (17), qui suivent dans le sens de poussée S, de chaque récipient de transport (14) et le couvercle (18) peut être respectée pendant l'opération d'éjection en fonction de la position respective du récipient de transport (14) au sein du châssis (13).

2. Système de déchargement (10) selon la revendication 1, **caractérisé en ce que** chaque élément de transport (12) est réalisé en forme de parallélépipède, chaque châssis (13) étant réalisé et mis au point pour recevoir au moins deux récipients de transport (14) agencés l'un au-dessus de l'autre, de sorte que le fond (16) d'un récipient de transport (14) constitue le couvercle (18) du récipient de transport (14) disposé en dessous de lui, et que le récipient de transport (14) disposé à la position la plus haute dans le châssis (13) est recouvert d'un élément de couvercle (22) associé au châssis (13) et servant de couvercle (18), et qu'il présente une première face de châssis tournée vers le moyen de poussée (20) et une deuxième face de châssis tournée vers le moyen d'accueil (21) et en vis-à-vis de la première face, et qu'il comprend sur les deux côtés du châssis, pour chaque récipient de transport (14), des traverses (23) orientées à la transversale du sens de poussée S des récipients de transport (14), servant de sécurité de transport (15), et qui coopèrent avec des modelages (24) correspondant dans le fond (16) de chaque récipient de transport (14), et qu'il comprend pour chaque récipient de transport (14) des rails de guidage (25) agencés latéralement sur le châssis (13) à la parallèle du sens de poussée S des récipients de transport (14) pour guider les récipients de transport (14) au sein du châssis (13), la distance verticale A entre les traverses (23) agencées les unes au-dessus des autres d'une part, et entre les traverses (23) les plus hautes et l'élément de couvercle (22) du châssis (13) d'autre part étant au moins sur le deuxième côté du châssis tourné vers le moyen d'accueil (21), respectivement supérieure à la hauteur totale d'un récipient de transport (14).

3. Système de déchargement (10) selon la revendication 1 ou 2, **caractérisé en ce que** le moyen d'accueil (21) est réalisé réglable au moins partiellement par rapport à la position d'éjection de chaque récipient de transport (14) pour modifier sa position en hauteur et/ou sa position angulaire.

4. Système de déchargement (10) selon l'une quelconque ou plusieurs des revendications 1 à 3, **caractérisé en ce que** le moyen d'accueil (21) présente un premier côté d'admission S_{E}, tourné vers la station de déchargement (19), et un deuxième côté de sortie S_{A} tourné dans le sens opposé à la station de déchargement (19), étant associé au moyen d'accueil (21) un mécanisme de réglage (26) au moyen duquel au moins le deuxième côté de sortie S_{A} du moyen d'accueil (21), tourné dans le sens opposé à la station de déchargement (19), est réalisé et mis au point pour être mobile vers le haut et vers le bas.

5. Système de déchargement (10) selon la revendication 4, **caractérisé en ce que** le moyen d'accueil (21) est réalisé et mis au point pour être mobile vers le haut et vers le bas sur les deux côtés au moyen du mécanisme de réglage (26).

6. Système de déchargement (10) selon la revendication 4 ou 5, **caractérisé en ce qu'**il comprend un moyen de commande (31) qui est réalisé et mis au point pour commander le mécanisme de réglage (26) en fonction de la position de chaque récipient de transport (14) au sein du châssis (13) au cours de l'opération d'éjection.

7. Système de déchargement (10) selon l'une quelconque ou plusieurs des revendications 4 à 6, **caractérisé en ce que** le moyen d'accueil (21) comprend une plate-forme d'alimentation (33) pour recevoir les récipients de transport (14) au cours de l'opération d'éjection, laquelle plate-forme d'alimentation (33) est réalisée et mise au point pour être ajustée en sa position en hauteur et/ou sa position angulaire au moyen du mécanisme de réglage (26).

8. Système de déchargement (10) selon la revendication 7, **caractérisé en ce que** la plate-forme d'alimentation (33) est constituée de plusieurs rouleaux convoyeurs (34) agencés parallèlement et à distance les uns des autres et qui sont susceptibles d'être entraînés en rotation à l'aide d'un moyen d'entraînement (35).

9. Système de déchargement (10) selon la revendication 7, **caractérisé en ce que** la plate-forme d'alimentation (33) est constituée d'au moins deux transmissions par chaîne (37) agencées à distance l'une de l'autre et qui sont susceptibles d'être entraînées à l'aide d'un moyen d'entraînement (38).

10. Système de déchargement (10) selon la revendication 8 ou 9, **caractérisé en ce qu'**est associée à la plate-forme d'alimentation (33) une plate-forme de convoyage (39) pour évacuer les récipients de transport (14) intégralement éjectés, la plate-forme de convoyage (39) et la plate-forme d'alimentation (33) étant réalisées mobiles l'une par rapport à l'autre à l'aide d'au moins un moyen d'entraînement (40) au moins dans le sens vertical, et présentant des sens de convoyage différents.

11. Système de déchargement (10) selon la revendication 10, **caractérisé en ce que** la plate-forme de convoyage (39) est constituée de plusieurs rouleaux convoyeurs (34) agencés parallèlement et à distance les uns des autres, réalisés fixes, et qui sont susceptibles d'être entraînés en rotation à l'aide d'un moyen d'entraînement (35).

12. Système de déchargement (10) selon l'une quelconque ou plusieurs des revendications 1 à 11, **caractérisé en ce qu'**est associé à la station de déchargement (19) un dispositif de levage (41) pour déplacer verticalement le châssis (13) vers la position d'éjection respective des récipients de transport (14).

13. Système de déchargement selon l'une quelconque ou plusieurs des revendications 1 à 12, **caractérisé en ce que** le moyen de poussée (20) comprend au moins un pilon (42) pour éjecter un récipient de transport (14) isolé ou plusieurs récipients de transport (14).

14. Procédé de déchargement d'au moins un élément de transport (12) conçu pour le transport et/ou le stockage de volailles vivantes, qui présente au moins un châssis (13) et au moins un récipient de transport (14) disposé dedans pour recevoir les volailles, chaque récipient de transport (14) ouvert en haut présentant un fond de récipient (16) et des parois latérales (17) sur tout le tour, et chaque récipient de transport (14) disposé dans le châssis (13) étant recouvert, par le haut, par un couvercle (18) qui est agencé à distance de l'arête supérieure K des parois latérales (17), comprenant les étapes :
- introduction d'au moins un élément de transport (12) dans une station de déchargement (19),
- éjection d'au moins un récipient de transport (14) se trouvant en position d'éjection, hors du châssis (13) dans le sens de poussée S à l'aide d'un moyen de poussée (20), et
- réception et convoyage, à l'aide d'un moyen d'accueil (21), de chaque récipient de transport (14) éjecté hors du châssis (13),
**caractérisé en ce que** la position de chaque récipient de transport (14) se trouvant en position d'éjection est commandée de manière active dans le sens vertical par rapport au couvercle (18) au cours de toute l'opération d'éjection, de sorte que la distance maximale A_{B} entre l'arête supérieure K des parois latérales (17) suivant dans le sens de poussée S, de chaque récipient de transport (14), et le couvercle (18) en fonction de la position respective du récipient de transport (14) au sein du châssis (13) est respectée au cours de l'opération d'éjection.

15. Procédé selon la revendication 14, **caractérisé en ce que** l'extrémité avant, dans le sens de poussée S, de chaque récipient de transport (14) est tout d'abord soulevée, en poussant à l'opération d'éjection, le récipient de transport (14) dans le sens de poussée S contre une sécurité de transport (15) du châssis (13) en forme de traverse (23), le récipient de transport (14) étant, au plus tard lorsque le récipient de transport (14) est éjecté au moins de moitié hors du châssis (13), accueilli en son fond de récipient (16) par le moyen d'accueil (21), et poussé vers le haut, **en ce que** le moyen d'accueil (21) est commandé vers le haut, jusqu'à ce que l'arête supérieure K des parois latérales (17), suivant dans le sens de poussée S, du récipient de transport (14) soit maintenue à une distance maximale A_{B} au couvercle (18) jusqu'à ce qu'elle atteigne la traverse (23) sur laquelle elle glisse.

16. Procédé selon la revendication 15, **caractérisé en ce que** le récipient de transport (14) est déplacé vers le bas directement après avoir été éjecté intégralement hors du châssis (13) et que le fond (16) du récipient de transport (14) dépasse et quitte la traverse (23) sur laquelle il glisse, est déplacé vers le bas pour agrandir la distance entre l'arête supérieure K des parois latérales (17) du récipient de transport (14) qui suivent et la traverse (23) du châssis (13) qui se trouve par-dessus, **en ce que** le moyen d'accueil (21) est commandé vers le bas.

17. Procédé selon l'une quelconque ou plusieurs des revendications 14 à 16, **caractérisé en ce que** les récipients de transport (14) se trouvant intégralement sur le moyen d'accueil (21) sont acheminés au choix dans le sens de poussée S ou transversalement au sens de poussée S.

18. Procédé selon l'une quelconque ou plusieurs des revendications 14 à 17, **caractérisé en ce que** le moyen d'accueil (21) est commandé automatiquement à l'aide d'un moyen de commande (31) en fonction de la position de chaque récipient de transport (14) au sein du châssis (13) au cours de l'opération d'éjection.

19. Procédé selon la revendication 18, **caractérisé en ce que** le moyen d'accueil (21) est déplacé vers le haut et/ou vers le bas à l'aide du moyen de commande (31) au choix sur le côté tourné vers la station de déchargement (19) et/ou sur le côté tourné dans le sens opposé à la station de déchargement (19), de sorte que chaque récipient de transport (14) est dirigé le long d'une trajectoire de déplacement individuelle au cours de l'opération d'éjection, tout en maintenant la distance maximale A_{B} entre l'arête supérieure K des parois latérales (17) suivantes du récipient de transport (14) et le couvercle (18).

20. Procédé selon l'une quelconque ou plusieurs des revendications 14 à 19, **caractérisé en ce que** plusieurs récipients de transport (14) agencés dans un châssis (13) les uns au-dessus des autres sont éjectés hors du châssis (13) via le moyen de poussée (20) en même temps ou décalés les uns par rapport aux autres, de sorte que les récipients de transport (14) d'un élément de transport (12) reposent en tas sur le moyen d'accueil (21) directement les uns sur les autres.
